# EUROPÄISCHE PATENTSCHRIFT

(11) **EP 1 016 207 B1**
(45) Veröffentlichungstag und Bekanntmachung des Hinweises auf die Patenterteilung: **14.05.2003**
(21) Anmeldenummer: 96943988.4
(22) Anmeldetag: 18.12.1996
(51) Int. Cl.: H02P 6/22

(54) **VERFAHREN ZUM STARTEN EINES ELEKTRONISCH KOMMUTIERTEN GLEICHSTROMMOTORS, UND MOTOR ZUR DURCHFÜHRUNG EINES SOLCHEN VERFAHRENS**
METHOD FOR STARTING AN ELECTRONICALLY COMMUTATED DC MOTOR AND A MOTOR FOR CARRYING OUT SUCH A METHOD
PROCEDE POUR LE DEMARRAGE D'UN MOTEUR C.C. A COMMUTATION ELECTRONIQUE, ET MOTEUR POUR LA MISE EN OEUVRE DE CE PROCEDE

(30) Priorität: 10.01.1996 DE 19600628
(43) Veröffentlichungstag der Anmeldung: 05.07.2000
(60) Teilanmeldung: 02004984.7
(73) Patentinhaber: PAPST-MOTOREN GMBH & CO. KG, 78112 St Georgen (DE)
(72) Erfinder: DIETERLE, Roland, D-78112 St. Georgen (DE); KARWATH, Arno, D-78628 Rottweil (DE); RAPPENECKER, Hermann, D-78147 Vöhrenbach (DE)
(86) Internationale Anmeldenummer: EP9605673
(87) Internationale Veröffentlichungsnummer: WO97025768

(56) Entgegenhaltungen:
- EP-A- 0 254 537
- EP-A- 0 419 303
- DE-A- 3 209 394
- DE-A- 3 235 774
- DE-A- 4 122 109
- DE-A- 4 441 372
- US-A- 5 304 902

## Beschreibung

### Technisches Gebiet

Die Erfindung betrifft ein Verfahren zum Starten eines elektronisch kommutierten Gleichstrommotors, und einen Motor zur Durchführung eines solchen Verfahrens.

### Stand der Technik

Es gibt derartige Motoren, die für den Betrieb in einer Drehrichtung ("Vorzugsrichtung") optimiert sind und die deshalb in der Gegenrichtung, im folgenden "Reversrichtung" genannt, gar nicht, oder nur mit Schwierigkeiten, anlaufen können, so daß der Anlauf in Reversrichtung nicht sicher gewährleistet ist. Diese Motoren arbeiten mit einem Hilfsmoment, das bei Betrieb in Reversrichtung einen sehr ungünstigen Verlauf hat. Dieses Hilfsmoment wird gewöhnlich als Reluktanz-Hilfsmoment ausgebildet. Im Rahmen der Erfindung wäre aber auch ein mechanisch erzeugtes Hilfsmoment möglich.

Man hat versucht, derartige Motoren dadurch in beiden Drehrichtungen startbar zu machen, daß man zwischen ihren Hauptpolen einen Hilfspol vorsieht, vgl, die DE 32 35 774 C2, doch sind derartige Motoren durch ihre spezielle Konstruktion aufwendig und konnten sich in der Praxis nicht durchsetzen.

Es ist deshalb eine Aufgabe der Erfindung, ein neues Verfahren zum Betrieb eines elektronisch kommutierten Motors, und einen Motor zur Durchführung eines solchen Verfahrens, bereitzustellen.

Nach einem ersten Aspekt der Erfindung wird diese Aufgabe gelöst durch ein Verfahren zum Starten eines zweipulsigen, elektronisch kommutierten Gleichstrommotors, welcher für Betrieb in eine Vorzugsrichtung ausgelegt Ist, in einer von beiden Drehrichtungen, im folgenden gewünschte Drehrichtung genannt, mit folgenden Schritten:
a) nach dem Einschalten wird der Rotor des Motors durch eine Startroutine - mittels alternierender Bestromung in der einen und der anderen Drehrichtung - in Zwangsoszillation um seine Ruhestellung versetzt;
b) während der Startroutine wird überwacht, ob der Motor anläuft;
c) wenn festgestellt wird, daß der Motor angelaufen ist, wird die Startroutine verlassen. Dadurch, daß der Rotor nach dem Starten in eine gesteuerte Zwangsoszillation um seine Ruhestellung versetzt wird, gelingt es, auch bei dieser Motorbauart, den Anlauf in beiden Drehrichtungen mit großer Sicherheit zu bewerkstelligen.

Dabei geht man mit besonderem Vorteil so vor, daß die Zwangsoszillation zumindest bei einem Start entgegen der Vorzugsrichtung mindestens einen Bestromungszyklus mit einer Bestromung entgegen der gewünschten Drehrichtung und einer Bestromung in der gewünschten Drehrichtung aufweist. Der Rotor des Motors bewegt sich dabei ruckartig hin und her und holt sozusagen Schwung für den Anlauf in der gewünschten Drehrichtung. Es hat sich gezeigt, daß auf diese Weise auch ein Anlauf entgegen der Vorzugsrichtung mit erheblicher Sicherheit gewährleistet werden kann.

Zur Überwachung des Anlaufs geht man mit Vorteil so vor, daß während der bei der Startroutine erfolgenden Bestromung des Motors in der gewünschten Drehrichtung die Zahl der Signalwechsel im Ausgangssignal eines dem Motor zugeordneten Rotorstellungssensors gezählt wird, wobei mit besonderem Vorteil die Startroutine verlassen wird, wenn die Zahl der Signalwechsel einen vorgegebenen Mindestwert überschritten hat. Der Motor kann dann auf normale Kommutierung Im Betrieb in der gewünschten Drehrichtung umgeschaltet werden.

Ein Motor, welcher sich zur Durchführung eines Verfahrens gemäß Anspruch 1 eignet, ist Gegenstand des Patentanspruchs 17.

Eine Weiterbildung der Erfindung ist Gegenstand des Anspruchs 18.

Ein solches Verfahren hat den Vorteil, dass der Motor besonders rasch und zuverlässig in der zur Vorzugsrichtung entgegengesetzten Drehrichtung startet, weil er vor dem eigentlichen Start dadurch "Schwung holt", dass er sich, gesteuert von seinem Programm, kurz in die Vorzugsrichtung dreht.

Ein Motor, welcher sich zur Durchführung eines Verfahren gemäß Anspruch 18 eignet, ist Gegenstand des Patentanspruchs 22.

Eine andere Weiterbildung der Erfindung ist Gegenstand des Anspruchs 23.

In der Massenfertigung erhält man nämlich immer wieder Einzelexemplare von zweipulsigen Motoren, die die Eigenschaft haben, dass sie in beiden Drehrichtungen gut starten können, und bei diesen erzielt man mit einem solchen Verfahren einen raschen Anlauf, da jeweils als erster Schritt der Motor in der gewünschten Drehrichtung gestartet und dabei der Anlauf überwacht wird. Ist freilich dieser Schritt erfolglos, so schließt sich eine Zwangsoszillation an, die den Motor auch in diesem Fall sicher startet.

Ein Motor, welcher sich zur Durchführung eines Verfahrens gemäß Anspruch 23 eignet, ist Gegenstand des Patentanspruchs 29.

Eine vorteilhafte Weiterbildung des Gegenstands aller Verfahrensansprüche ergibt sich durch den Gegenstand des Anspruchs 30. Hiermit gelingt es, den Drehwinkel, bei dem der Statorstrom im Motor eingeschaltet wird, mit zunehmender Drehzahl stärker nach früh zu verlegen, also eine sogenannte "Frühzündung" zu erreichen, wobei auf diese Weise eine solche drehzahlabhängige "Frühzündung" in beiden Drehrichtungen möglich und für beide Drehrichtungen optimierbar ist.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: eine Prinzipdarstellung eines zweipulsigen, zweisträngigen Außenläufermotors mit Reluktanz-Hilfsmoment,
- Fig. 2: ein Momentendiagramm zur Erläuterung der beim Motor nach Fig. 1 im Betrieb auftretenden Drehmomente, wenn dieser Motor in seiner Vorzugsrichtung 14 läuft,
- Fig. 3: eine Darstellung analog Fig. 1, aber für den Fall, daß dieser Motor in Reversrichtung 40 läuft,
- Fig. 4: ein Momentendiagramm zur Erläuterung der beim Motor nach Fig. 3 auftretenden Drehmomente, wenn dieser Motor in Reversrichtung startet,
- Fig. 5: ein Prinzipschaubild zur Erläuterung verschiedener Probleme, die beim Start In Reversrichtung auftreten können,
- Fig. 6: ein Schaltbild einer Schaltung zum Betrieb eines zweipulsigen Motors, z.B. des Motors der Fig. 1 oder 3,
- Fig. 7: ein Übersichts-Flußdiagramm, welches den zeitlichen Ablauf der Motorsteuerung bei der Schaltung nach Fig. 6 zeigt,
- Fig. 8A: und 8B ein Flußdiagramm, welches den Ablauf des Anlaufvorgangs beim Motor nach Fig. 6 zeigt,
- Fig. 9: ein Flußdiagramm, welches den Ablauf der Kommutierungssteuerung beim Motor der Fig. 6 zeigt,
- Fig 10: ein Flußdiagramm, welches den Ablauf der Zündwinkelverschiebung bei einem Motor nach Fig. 6 zeigt,
- Fig. 11: ein Prinzipschaubild analog Fig. 5, welches die Vorgänge beim Start eines zweipulsigen Motors, z.B. des Motors nach Fig. 6, zeigt; diese Vorgänge sind für den Start in Reversrichtung dargestellt, laufen jedoch beim Anlauf in Vorzugsrichtung in genau der gleichen Weise ab, mit dem Unterschied, daß beim Start in Vorzugsrichtung der Anlauf meist direkt erfolgt, da ein solcher Motor für die Vorzugsrichtung optimiert ist,
- Fig. 12: ein Schaubild zur Erläuterung eines Starts bei der Anordnung der Fig. 6,
- Fig. 13, 14 und 15: Schaubilder zur Erläuterung der Zündwinkelverschiebung bei der Anordnung nach Fig. 6,
- Fig. 16: eine Variante zu dem Flußdiagramm der Fig. 8, wobei nur die abweichenden Programmschritte dargestellt sind, und
- Fig. 17: ein Schaubild zur Erläuterung von Fig. 16.

Die vorliegende Erfindung ist schwierig zu verstehen, und deshalb werden zuerst ihre "physikalischen Grundlagen" erörtert.

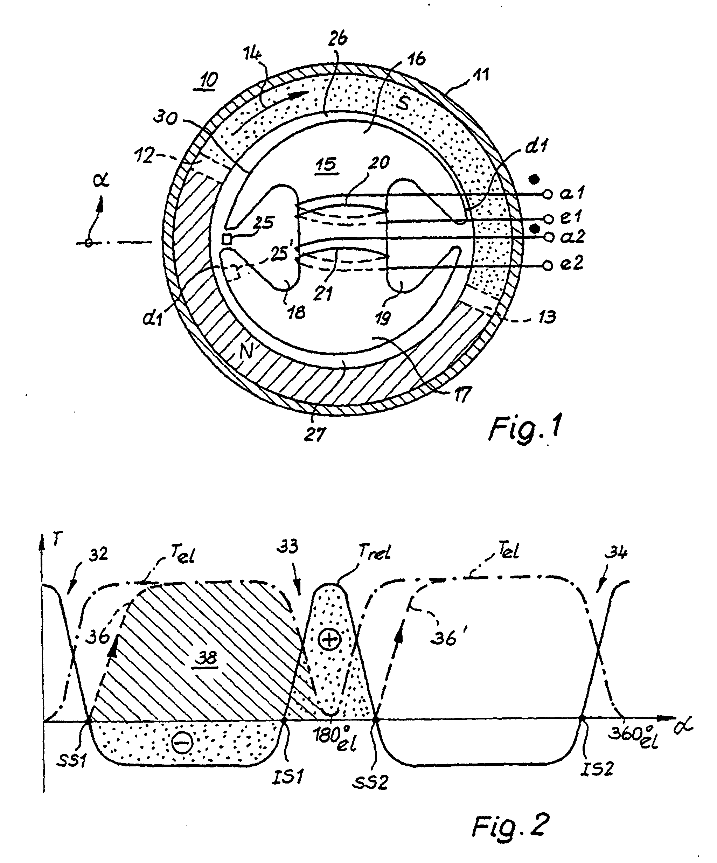

Jedermann weiß, daß ein Automotor nur in einer bestimmten Drehrichtung laufen kann. Genauso gibt es auch Elektromotoren, die für eine bestimmte Drehrichtung optimiert sind und in der Gegenrichtung entweder gar nicht oder nur mit Schwierigkeiten laufen können. Unter anderem gilt dies für den Typ von elektronisch kommutierte Motoren, den man heute allgemein als "two-phase motor" bezeichnet, und den man präziser als zweipulsigen Motor bezeichnen sollte, weil bei ihm die Statorwicklung pro Drehung des Rotors von 360° el. zwei Stromimpulse erhält, vgl. in der nachfolgenden Fig. 2 die beiden impulsförmigen Drehmomente Tₑₗ, die durch entsprechende Stromimpulse bewirkt werden. Zur Terminologie wird verwiesen auf den grundlegenden Aufsatz von Dr.-Ing. Rolf Müller in "asr-digest für angewandte Antriebstechnik", 1977, Seiten 27 bis 31.

Derartige Motoren gibt es als einsträngige Motoren, vgl. z.B. die EP 084156 B1, Fig. 2, 3 und 9, und es gibt sie als zweisträngige Motoren, vgl. die DE 30 10 435 C3. Diese Motoren gibt es als solche mit zylindrischem Luftspalt, also als Innenoder Außenläufermotoren, und es gibt sie als Motoren mit flachem Luftspalt, vgl. die DE 23 21 022 C2. Innerhalb dieser einzelnen Kategorien gibt es enorm viele Untervarianten, die sich aber alle auf das Grundprinzip zurückführen lassen, das vom Erfinder in der Literaturstelle asr ausführlich beschrieben wird. Die vorliegende Erfindung eignet sich für alle diese Varianten in gleicher Weise. Da solche Motoren in einer Stückzahl (bis jetzt) von ca. 0,1 Milliarden hergestellt wurden, erscheint eine weitere Erläuterung an Beispielen aus der Patentliteratur nicht notwendig. Derartige Motoren finden sich heute z.B. in praktisch jedem Computer zum Antrieb des Lüfters.

Diese Motoren haben gemeinsam, daß sie zuverlässig nur in einer bestimmten Drehrichtung starten, die man als Vorzugsrichtung bezeichnen kann. Man hat Versuche gemacht, bei ihnen den Start in beiden Drehrichtungen zu ermöglichen, vgl. z.B. die DE 32 35 774 C2, doch verwendet man für den Betrieb in zwei Drehrichtungen praktisch immer elektronisch kommutierte Motoren in drei- oder vierpulsiger Ausführung, vgl. die Bilder 4, 5 und 6 der Literaturstelle asr.

Um die Erfindung erläutern zu können, wird nachfolgend auf einen zweisträngigen, zweipulsigen Außenläufermotor mit zylindrischem Luftspalt Bezug genommen, da die Erfindung dort am einfachsten zu verstehen ist. Jedoch wird ausdrücklich und unmißverständlich darauf hingewiesen, daß dies nur eine "Eselsbrücke" ist, und daß sich die Erfindung für alle zweipulsigen Motoren in gleicher Weise eignet. Es wäre nicht nützlich oder sinnvoll, die Erfindung z.B. auch noch an einem Motor mit flachem Luftspalt zu erläutern, wie ihn die DE 23 21 022 C2 zeigt.

**Fig. 1** zeigt ein typisches Beispiel für einen zweipulsigen kollektorlosen Außenläufermotor 10. Dieser hat einen Außenrotor 11 mit einem durchgehenden Magnetring, dessen Magnetisierung etwa trapezförmig ausgebildet ist, d.h. die Magnetflußdichte im Bereich der Pole ist weitgehend konstant, und die Bereiche zwischen diesen Polen, die man oft auch als Pollücken bezeichnet, obwohl dort in der Realität meist keine Lücken vorhanden sind, sind schmal.

In Fig. 1 sind die Stellen mit praktisch konstanter Magnetflußdichte für den Nordpol durch Schraffieren und für den Südpol durch Punkte symbolisch angedeutet, um das Verständnis zu erleichtern. Der Rotor 11 ist z.B. als radial magnetisiertes permanentmagnetisches Teil aus Bariumferrit oder einem sogenannten Gummimagneten ausgebildet. Die beiden Pollücken sind ebenfalls symbolisch bei 12 und 13 angedeutet.

Fig. 1 zeigt den Rotor 11 in einer seiner beiden stabilen Ruhestellungen, die er im stromlosen Zustand einnehmen kann. Diese Ruhestellungen sind durch die Form des Luftspalts und die Form der Magnetisierung bestimmt. Im Betrieb läuft der Rotor 11 normalerweise in Richtung des Pfeiles 14. Durch die Erfindung wird auch ein sicherer Anlauf und optimierter Betrieb in entgegengesetzter Richtung ermöglicht.

Der Stator 15 des Motors 10 ist als Doppel-T-Anker mit einem oberen Pol 16 und einem unteren Pol 17 ausgebildet. Beide haben etwa die Umrißform eines Regenschirms, umspannen also jeweils fast den ganzen Polbogen. Sie schließen zwischen sich zwei Nuten 18 und 19 ein, in denen zwei Wicklungsstränge 20 und 21 einer zweisträngigen Wicklung angeordnet sind. Die Anschlüsse des Wicklungsstranges 20 sind mit a1 und e1 bezeichnet, die des Wicklungsstranges 21 mit a2 und e2. Die Wicklungen 20 und 21 haben gleiche Windungszahlen und den gleichen Windungssinn, d.h. wenn ein Gleichstrom von a1 nach e1 fließt, ergibt sich dieselbe Magnetisierung des Stators 15, wie wenn derselbe Gleichstrom von a2 nach e2 fließt. Meist sind die Drähte der beiden Windungen parallel gewickelt, also in Form einer sogenannten Bifilarwicklung (in Fig. 1 nicht dargestellt).

Rotorstellungsabhängige Sensormittel 25, hier ein Hall-IC, sind in einer Winkelstellung am Stator 15 angeordnet, die etwa der Öffnung der Nut 18 (oder alternativ der Nut 19) entspricht, also der sogenannten neutralen Zone. (Befindet sich die Pollücke 12 oder 13 in einer Stellung gegenüber der Nutöffnung 18 oder 19, also gegenüber dem Sensor 25, so kann der Motor 10 kein elektromagnetisches Drehmoment erzeugen, d.h. er hat in dieser Drehstellung eine Lücke seines elektromagnetisch erzeugbaren Drehmoments.)

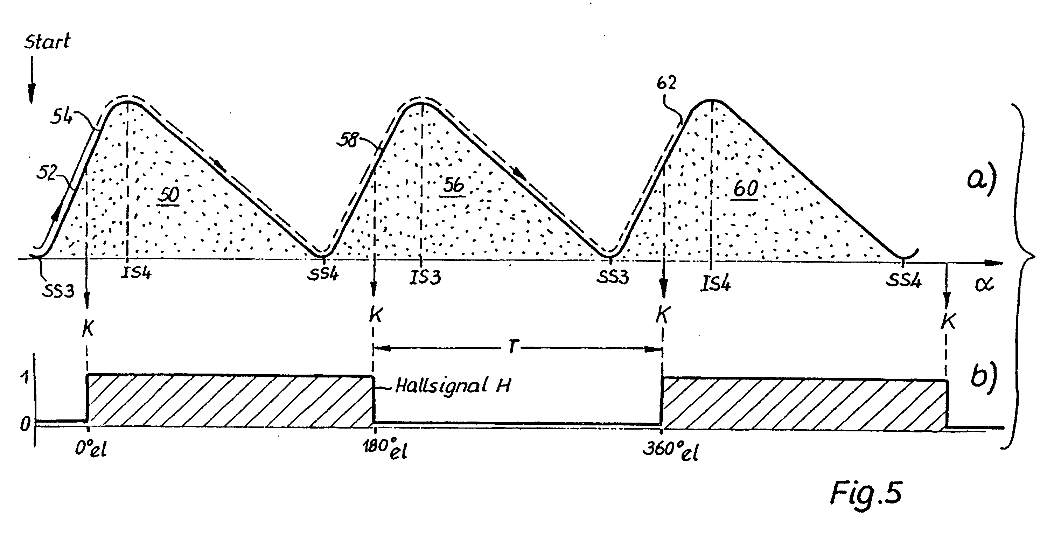

Der Hall-IC 25 wird durch das Magnetfeld des permanentmagnetischen Rotors 11 gesteuert und gibt, abhängig von der Rotorstellung, ein Signal ab, das entweder hoch oder tief ist, also bei Drehung des Rotors 11 praktisch ein Rechtecksignal darstellt, dessen hohe und tiefe Abschnitte jeweils etwa 180° e1, lang sind, wie nachfolgend in Fig. 5b dargestellt. (Beim dargestellten Motor 10 mit nur zwei Rotorpolen S und N sind mechanische Grade = elektrische Grade. Bei einem Motor mit vier Rotorpolen sind 180° mech. = 360° el.)

Der Luftspalt 26 über dem Statorpol 16 und der Luftspalt 27 über dem Statorpol 17 sind in besonderer Weise ausgebildet. Ausgehend von der Nut 18 nimmt, in Drehrichtung 14 gesehen, der Luftspalt 26 während etwa 10 bis 15° el. bis zu einer ersten Stelle 30 zu, an welcher er sein Maximum erreicht. Von da an nimmt der Luftspalt 26 über etwa 165 bis 170° el. ab bis etwa zur Öffnung der Nut 19, wo er seinen Minimalwert d1 erreicht. Der Luftspalt 27 hat, wie dargestellt, einen identischen Verlauf. Diese Luftspaltform, im Zusammenwirken mit der beschriebenen Art der Magnetisierung des Rotors 11, bewirkt im Betrieb die Entstehung eines Reluktanzmoments Tᵣₑₗ, das in Fig. 2 dargestellt ist.

Die Rotorstellung, in der die Pollücke 12 dem Hall-IC 25 gegenüberliegt, sei als 0° el. angenommen, d.h. in dieser Stellung ändert der Hall-IC 25 bei Drehung des Rotors 11 sein Ausgangssignal. Dreht man - bei stromlosem Motor - den Rotor 11 von Hand in diese Stellung 0° el., so wird er durch das in Drehrichtung 14 wirksame Reluktanzmoment Tᵣₑₗ so weitergedreht, daß die Pollücke 12 etwa der Stelle 30 größten Luftspalts gegenüberliegt. Diese Stellung ist eine stabile Startstellung oder Ruhestellung des Motors und deshalb in Fig. 2 mit SS1 bezeichnet. Sie liegt hier bei ca. 30° el., und genauso gibt es bei diesem Ausführungsbeispiel eine zweite stabile Startstellung oder Ruhestellung SS2 bei ca. 210° el., wie in Fig. 2 dargestellt, d.h. wenn der Motor 10 abgeschaltet wird, dreht er sich automatisch in eine dieser beiden Ruhestellungen.

Dreht man - bei stromlosem Motor - den Rotor 11, ausgehend von einer solchen Ruhestellung, in Richtung des Pfeiles 14, so muß man dazu ein Drehmoment aufbringen, d.h. das Reluktanzmoment Tᵣₑₗ wirkt bremsend, etwa bis zur Stelle d1 mit kleinstem Luftspalt, wo Tᵣₑₗ zu Null wird. Der Rotor 11 kann gelegentlich in dieser Stellung stehenbleiben, die bei ca. 155° el. bzw. 335° el. liegt, und man kann diese (instabile) Stellung deshalb als instabile Ruhestellung IS1 bzw. IS2 bezeichnen.

Dreht man, ausgehend von IS1, den Rotor 11 geringfügig von Hand in Richtung des Pfeiles 14, so wird er durch ein starkes antreibendes Tᵣₑₗ bis zur Stellung SS2 weitergedreht.

Man hat also zwischen SS1 und IS1 ein bremsendes Tᵣₑₗ von relativ geringer Amplitude, und zwischen IS1 und SS2 ein antreibendes Tᵣₑₗ von hoher Amplitude.

Durch den Hall-IC 25 wird der Strom in den beiden Strängen 20 und 21 so gesteuert, daß zwischen 0° el. und 180° el. ein antreibendes elektromagnetisches Drehmoment Tₑₗ erzeugt wird, das in den Bereichen von 0° el. und von 180° el. eine Lücke 32 bzw. 33 hat, und daß ebenso zwischen 180 und 360° el. ein antreibendes elektromagnetisches Drehmoment Tₑₗ erzeugt wird, das bei 180° el. und 360° el. eine Lücke 33 bzw. 34 hat. Diese Lücken 32, 33, 34 werden durch den positiven Teil von Tᵣₑₗ ausgefüllt. Dieser ist deshalb durch ein Pluszeichen kenntlich gemacht.

Beim Start an einer der Stellen SS1 oder SS2 wird das antreibende Tₑₗ gemäß einer Kurve 36 bzw. 36' erzeugt, d.h. bei Start von der Stellung SS1 wirkt während des in Fig. 2 schraffierten Bereichs 38 ein kräftiges Drehmoment Tₑₗ, das den Motor 10 sicher beschleunigt und zum Anlaufen bringt. Der sichere Anlauf ist ein wesentlicher Vorteil dieser Bauart, aber er gilt nur für die Drehrichtung 14, also die Vorzugsrichtung.

Man kann sich das - als Eselsbrücke - so erklären, daß die Polücke 12 (oder 13) immer die Stelle mit größtem Luftspalt 26 bzw. 27 sucht, also z.B. die Stelle 30.

Dreht man die Pollücke 12 aus der Stellung 30 in Richtung des Pfeiles 14, so wird der Luftspalt 27 unter ihr kleiner, d.h. sie muß sozusagen bergauf marschieren, aber bei geringer Steigung, weshalb der Anlauf in dieser Richtung problemlos möglich ist.

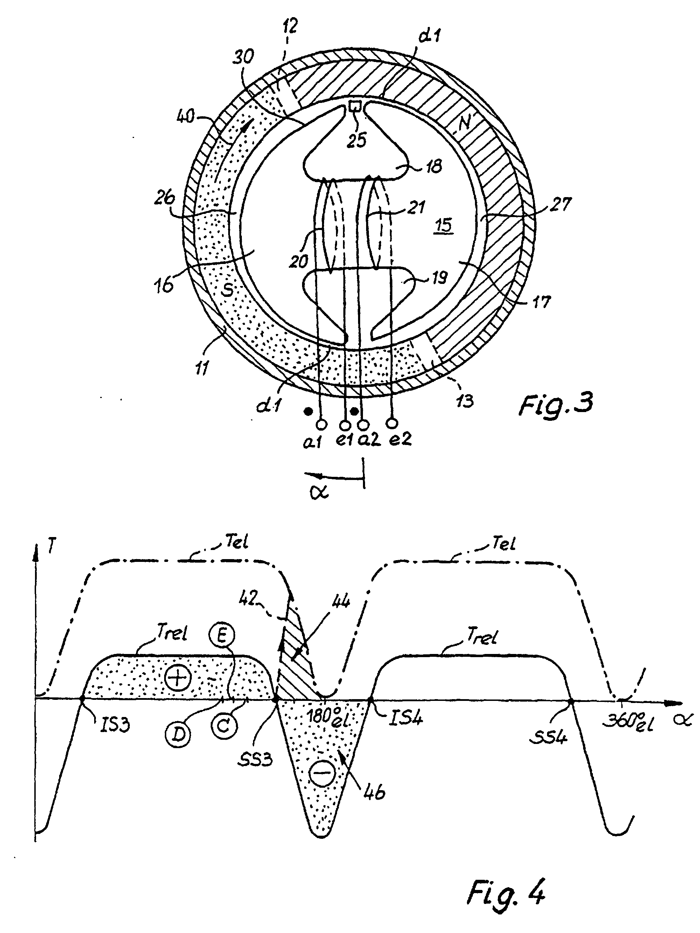

Dies gilt aber nicht für den Anlauf in Reversrichtung, was nachfolgend anhand der **Fig. 3 und 4** erläutert wird. Diese zeigen den Fall des Anlaufs in der Reversrichtung 40. Abweichend von Fig. 1 ist hier der Drehwinkel 0° el. dann angenommen, wenn die Pollücke 12 der Nut 19 gegenüberliegt, wie in Fig. 3 eingezeichnet.

Das elektromagnetische Drehmoment Tₑₗ stimmt mit Fig. 1 und 2 überein, aber das Reluktanzmoment Tᵣₑₗ hat jetzt eine sehr ungünstige Form, d.h. die stabile Ruhestellung SS3 liegt bei etwa 150° el., SS4 bei ca. 330° el., und die instabilen Ruhestellungen IS3 bei ca. 30° el. bzw. IS4 bei 210° el.

Der Motor 10 muß in diesem Fall aus SS3 oder SS4 anlaufen, d.h. bei Start aus SS3 erhält man einen Anstieg von Tₑₗ gemäß der Linie 42, und dieses antreibende Drehmoment wirkt nur während des kurzen Bereichs, der in Fig. 4 schraffiert und mit 44 bezeichnet ist. Wie man sieht, reicht diese Energiemenge 44 gewöhnlich nicht zur Überwindung des bremsenden Teils 46 von Tᵣₑₗ aus, der zwischen SS3 und IS4 liegt und mit einem Minuszeichen versehen ist, d.h. der Motor 10 kann in dieser Richtung 40 nicht anlaufen, oder er läuft nur manchmal an, macht aber oft nur einen Ruck in der Reversrichtung 40 und bleibt dann stehen, wobei ein hoher Strom durch seine Statorwicklung fließt.

Der Leser sollte dazu auch wissen, daß im Bereich um 0° el., 180° el. etc. bei diesen Motoren die Erzeugung eines elektromagnetischen Drehmoments Tₑₗ nicht möglich ist, d.h. an diesen Stellen befindet sich immer eine Momentenlücke von Tₑₗ, deren Breite vor allem von der Form der Magnetisierung des Rotormagneten 11 abhängt.

Als weitere Eselsbrücke ist in **Fig. 5a** das Reluktanzmoment in Form einer Bergund Tallandschaft dargestellt.

Startet der Motor aus der Stellung SS3 (vgl. Fig. 4), so kann es sein, daß er vom ersten Berg 50 nur die Hälfte schafft, d.h. er bleibt an der Stelle 52 stehen, und dort geht es weder vor- noch rückwärts, wobei noch kein Kommutierungssignal K erzeugt wird.

Es kann auch sein, daß es der Motor bis zur Stelle 54 schafft, wobei ein Signal K erzeugt wird, also eine Kommutierung stattfindet, aber ein Anlauf ebenfalls nicht möglich ist.

Es kann auch sein, daß es der Rotor über den ersten Berg 50 hinweg bis zum zweiten Berg 56 und dort bis zur Stelle 58 schafft, wobei dann zwei Kommutierungssignale K erzeugt werden und anschließend der Motor z.B. an der Stelle 58 hängenbleibt.

Ebenso kann es auch sein, daß es der Motor auch über den Berg 56 hinweg bis zum Berg 60 schafft und er dort an der Stelle 62 hängenbleibt, wobei er insgesamt drei Kommutierungssignale K erzeugt.

Die Erfahrung zeigt, daß der Motor nach der Überwindung von fünf Bergen 50, 56, 60 etc., also fünf bremsenden Anteilen 46 von Tᵣₑₗ, sicher in Reversrichtung gestartet ist, und deshalb wird als Kriterium für eine kontinuierliche Rotation in der gewünschten Drehrichtung, also für einen sicheren Start, der Umstand verwendet, daß mehr als vier Kommutierungssignale K nacheinander bei Antrieb des Motors in der gewünschten Drehrichtung erzeugt werden.

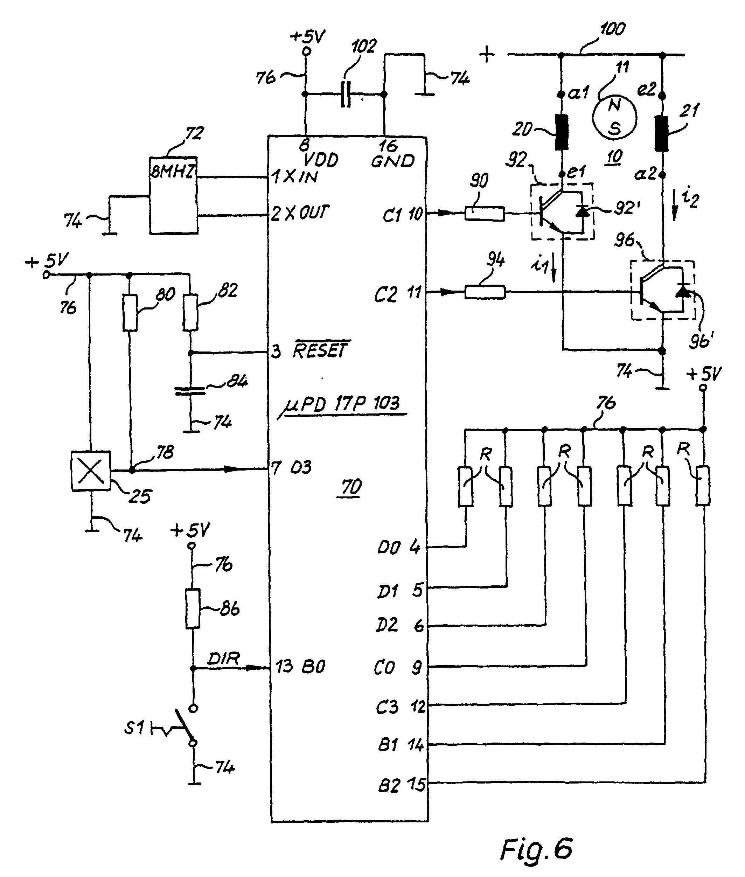

**Fig. 6** zeigt den Aufbau der verwendeten Schaltung zum Betrieb des Motors 10. Nochmals sei hervorgehoben, daß dieser Motor nur ein Beispiel ist, denn ohne ein solches konkretes Beispiel wäre die Erfindung nur schwer verständlich. Die Erfindung eignet sich in gleicher Weise für jeden zweipulsigen Motor, z.B. für einen Motor mit flachem Luftspalt, wie in der DE 23 21 022 C2 dargestellt, oder für einen Innenläufermotor, oder für einen zweipulsigen Motor, bei dem der einzige Strang über eine Vollbrückenschaltung mit Strom versorgt wird. Es versteht sich von selbst, daß im Rahmen einer einzigen Patentanmeldung alle diese Varianten nur erwähnt, aber nicht an Ausführungsbeispielen erläutert werden können.

Die Schaltung nach Fig. 6 verwendet als Beispiel einen 4-Bit-Mikroprozessor 70 mit einem RESET-Eingang 3. Dargestellt ist der Mikroprozessor 17P103, (Hersteller: NEC), doch eignet sich die Erfindung in gleicher Weise für jeden anderen Mikroprozessor oder Mikrocontroller. - Die Bezeichnungen der Anschlüsse für den genannten Mikroprozessortyp ergeben sich aus Fig. 6 und werden deshalb im Text nicht wiederholt. Dieser Mikroprozessor enthält verschiedene interne Register, ein RAM und ein ROM, und im ROM befindet sich das Programm zur Steuerung des Motors 10, das nachfolgend beschrieben wird.

An den Eingängen 1 und 2 des Mikroprozessors 70 ist ein 8 MHz Keramikresonator 72 angeschlossen, der als Taktgeber für den Mikroprozessor 70 dient und dessen Betriebsfrequenz definiert. Diese Frequenz definiert auch, wieviel Zeit für den Durchlauf durch eine der nachfolgend beschriebenen Programmschleifen S130 benötigt wird.

Der Hall-IC 25 ist mit seinem negativen Anschluß an eine Minusleitung (GND) 74 angeschlossen, und mit seinem positiven Anschluß an eine Plusleitung 76 mit einer geregelten Gleichspannung von z.B. + 5 V. Sein Ausgang 78 ist mit dem Port D3 (Eingang 3) des Mikroprozessors 70 verbunden, außerdem über einen Pullup-Widerstand 80 (z.B. 10 k) mit der Plusleitung 76 (Hall-IC 74 mit open-collector-Ausgang; k = kΩ).

Der Reseteingang 3 (/RESET) ist über einen Widerstand 82 (z.B. 100 k) mit der Plusleitung 76, und über einen Kondensator 84 (z.B. 2,2 µF) mit der Minusleitung 74 verbunden.

Wenn der Motor 10 eingeschaltet wird, ist der Kondensator 84 entladen, so daß am Reseteingang das Signal LOW liegt, und dieses Signal wird als Power-Up-Reset (PU-Reset) erkannt, d.h. der Mikroprozessor 70 führt in diesem Fall bestimmte Intitialisierungsvorgänge durch, die nachfolgend anhand der Programmschritte S112 bzw. 112a und S114 beschrieben werden. Anschließend wird der Kondensator 84 über den Widerstand 82 geladen, und der Mikroprozessor 70 erkennt nach der Ladung am Eingang 3 das Potential HIGH und gibt den Start des Motors 10 frei.

Am Port B0 (Eingang 13) ist ein Schalter S1 in der dargestellten Weise angeschlossen, mit dem die Drehrichtung des Motors 10 vom Benutzer festgelegt wird. Dieser Schalter liegt zwischen dem Eingang 13 und der Minusleitung 74, während zwischen dem Eingang 13 und der Plusleitung 76 ein Widerstand 86 (z.B. 10 k) liegt. Ist der Schalter S1 geschlossen, so liegt am Port B0 das Potential LOW, das oft auch als "0" bezeichnet wird, und dieses Potential entspricht einer bestimmten Drehrichtung. Ist S1 offen, so hat der Port B0 das Potential HIGH, das oft auch als "1" bezeichnet wird, und dieses Potential entspricht der entgegengesetzten Drehrichtung. Das Signal am Port B0 wird mit DIR bezeichnet und bestimmt die Drehrichtung. Das Signal DIR kann auf beliebige Weise erzeugt werden, z.B. von einer beliebigen elektronischen Schaltung, die den Lauf des Motors 10 steuert.

Die Ports D0, D1, D2, C0, C3, B1 und B2 sind mit identischen Widerständen R (z.B. 47 k) an die Plusleitung 76 angeschlossen. Dies sind freie Ports, die im Rahmen der vorliegenden Erfindung keine Funktion haben und deshalb auf ein definiertes Potential gelegt sind, damit sie keine Störungen verursachen.

Die Ports C1 und C2 steuern die Kommutierung des Motors 10. An den Port C1 ist über einen Widerstand 90 (z.B. 4,7 k) ein npn-Darlingtontransistors 92 angeschlossen, der eine Freilaufdiode 92' enthält. Ebenso ist an den Port C2 über einen Widerstand 94 (z.B. 4,7 k) ein npn-Darlingtontransistor 96 angeschlossen, der eine Freilaufdiode 96' enthält. Der Kollektor des Transistors 92 ist mit dem Anschluß e1 des Strangs 20 verbunden, der des Transistors 96 mit dem Anschluß a2 des Strangs 21. Die Anschlüsse a1, e2 (vgl. Fig. 1) sind mit einer Plusleitung 100 verbunden, an der z.B. ein Potential von + 12 V,+ 24 V, + 48 V, + 60 V oder dergleichen liegen kann, also die Betriebsspannung des Motors 10. Die Stränge 20, 21 sind bevorzugt mit parallelen Drähten gewickelt, also als sogenannte "Bifilarwicklung". Die Emitter der beiden Transistoren 92 und 96 sind mit der Minusleitung 74 verbunden. Die Transistoren 92, 96 werden vom Mikroprozessor 70 alternierend eingeschaltet, aber niemals gleichzeitig.

Der Eingang 8 des Mikroprozessors 70 ist mit der Plusleitung 76 verbunden, der Eingang 16 mit der Minusleitung 74, also mit Masse. Zwischen den Eingängen 8 und 16 liegt ein Kondensator 102 (z.B. 33 nF), der verhindern soll, daß Störimpulse über den Eingang 8 zum Mikroprozessor 70 gelangen.

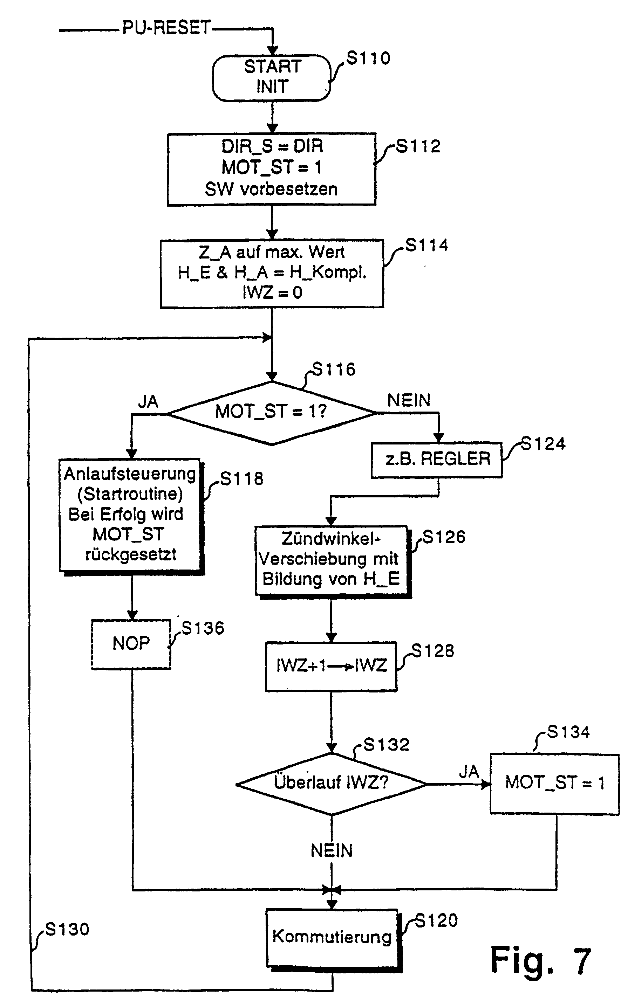

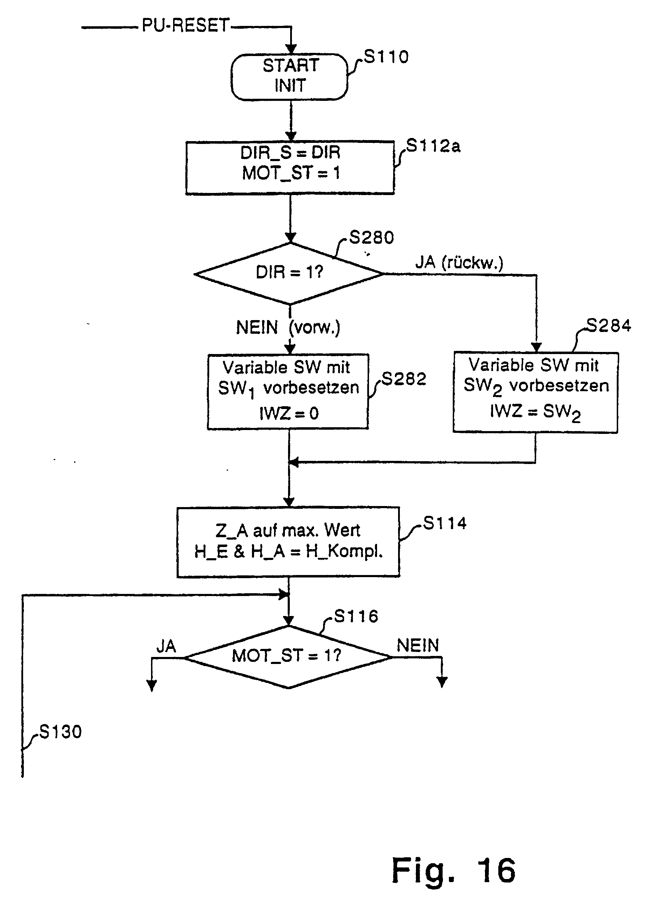

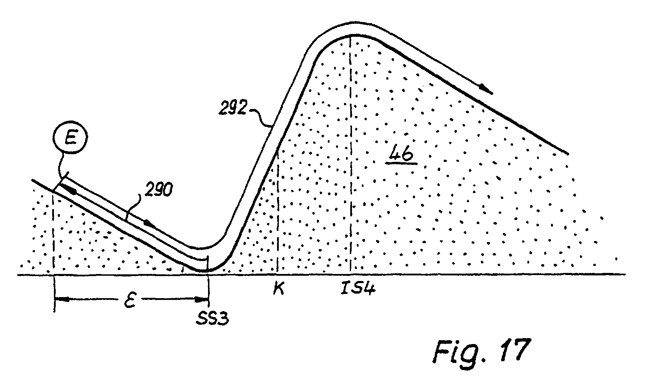

**Fig. 7** zeigt den grundlegenden Aufbau des Programms, das im ROM des Mikroprozessors 70 gespeichert ist. Als Vorbemerkung zum Programm gemäß Fig. 7 bis 10 sei gesagt, daß dieses Programm für den Betrieb des Motors in beiden Drehrichtungen dient, wobei es - bis auf kleine Unterschiede, z.B. in den Schritten S258, 260, 262 - dieselbe Struktur für beide Drehrichtungen hat, d.h. das Programm hat eine symmetrische Struktur. Wie nachfolgend bei Fig. 16 und 17 beschrieben, ist auch eine unsymmetrische Struktur möglich und kann einen schnelleren Start ermöglichen.

Da der Motor in der Vorzugsrichtung 14 problemlos startet, ist der erste Schritt bei diesem Programm ein Startversuch in der durch das Signal DIR (Schalter S1) eingestellten Drehrichtung. Dieser erste Startversuch ist jedoch beim Start in Reversrichtung 40 regelmäßig erfolglos, d.h. der Motor startet dabei nicht oder nur sporadisch, und dieser Schritt kann deshalb bei Start in der Reversrichtung weggelassen werden, wie bei der Variante nach Fig. 16 und 17 dargestellt, stört aber auch nicht, so daß man aus Gründen der Einheitlichkeit des Programmaufbaus für beide Drehrichtungen diesen Schritt auch beim Start in Reversrichtung 40 ausführen kann, wodurch sich lediglich der Startvorgang in Reversrichtung 40 um einige Millisekunden verzögert. Andererseits hat dieser Schritt den Vorteil, den Rotor 11 des Motors 10 etwas zu bewegen, wodurch z.B. die Lagerreibung von Gleitlagern etwas reduziert wird und die folgenden Schritte des Anlaufs leichter ablaufen.

Zweck des Programmablaufs - beim Start in Reversrichtung 40 - ist es, den Rotor aus seiner stabilen Ruhestellung (SS3 oder SS4 in Fig. 4) in eine Stellung zu bringen, die in Fig. 4 irgendwo zwischen IS3 und SS3 oder zwischen IS4 und SS4 liegt, z.B. in eine der Stellungen, die in Fig. 4 mit C, D und E bezeichnet sind. Startet der Rotor aus der Stellung D, so wird er vom antreibenden Reluktanzmoment Tᵣₑₗ während ca 30° el. angetrieben, und er wird vom antreibenden elektromagnetischen Drehmoment Tₑₗ während ca 50° el. angetrieben, so daß er genügend Schwung holen kann, um anschließend den negativen, bremsenden Teil 46 des Reluktanzmoments Tᵣₑₗ zu überwinden und anzulaufen.

Sofern sich der Motor vor einem Start in Reversrichtung 40 zufällig einmal in einer der instabilen Startstellungen IS3 oder IS4 befindet, stellt der Anlauf bereits beim ersten Versuch kein Problem dar, da dann die Startbedingungen optimal sind.

Der Motor wird also beim Start in Reversrichtung 40 zunächst aus seiner stabilen Ruhestellung (SS3 oder SS4) in eine günstigere Startstellung gebracht, was dadurch geschieht, daß der Rotor durch das Programm in sehr schneller Folge hinund hergedreht wird, was man als eine gesteuerte (controlled) Zwangsoszillation bezeichnen kann. Startet der Motor 10 hierbei nicht sofort, werden in bevorzugter Weise die Amplituden der Zwangsoszillation bei jedem neuen Versuch vergrößert. Berührt man den startenden Rotor mit der Hand, so spürt man dessen Vibrationen, die durch die schnell wechselnden Zwangsdrehungen in unterschiedlicher Richtung bewirkt werden.

Zur Realisierung dieses Grundgedankens gibt es verschiedene erfolgversprechende Strategien. Der nachstehend beschriebene Programmaufbau ermöglicht einen außerordentlich sicheren Start in beiden Drehrichtungen, wie umfangreiche Versuche in den Laboratorien der Anmelderin gezeigt haben. Dieser Programmaufbau stellt deshalb ein bevorzugtes Ausführungsbeispiel der Erfindung dar, aber naturgemäß nicht die einzig mögliche Ausführungsform.

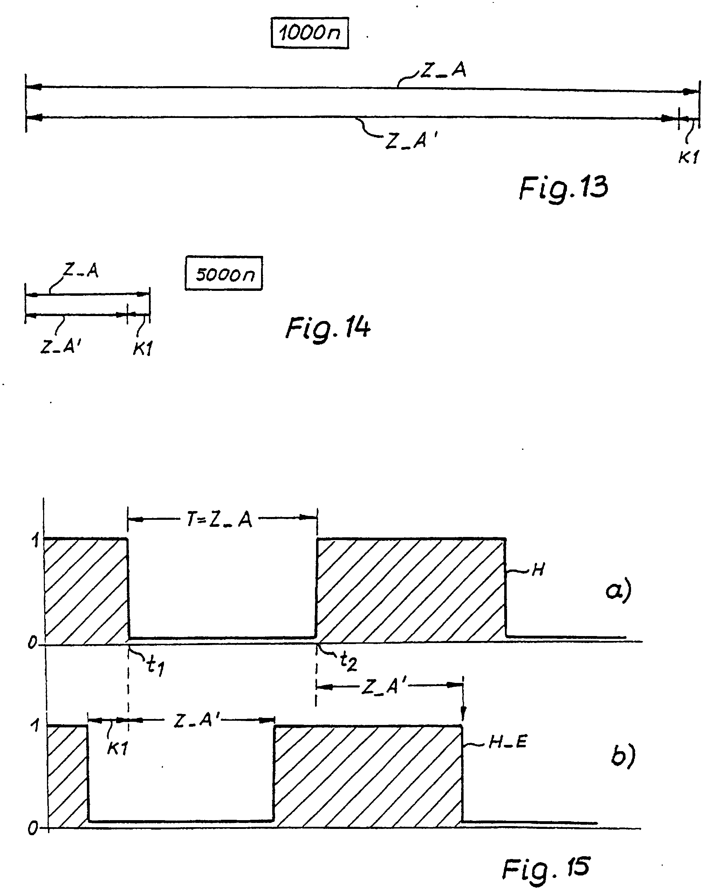

In den nachfolgenden Flußdiagrammen werden folgende Abkürzungen verwendet:
DIR ... Richtungssignal am Port B0.
H_S ... Register für Steuerzwecke innerhalb des Programms.
MOT_ST ... Register, das beim Start des Motors gesetzt wird, und das anzeigt, daß sich das Programm in seiner Startroutine befindet.
H ... Hallsignal, wie z.B. in Fig. 5b dargestellt.
   Statt eines Hallsensors 25 könnte jeder andere Rotorstellungssensor verwendet werden, z.B. auch ein mechanischer Schalter, oder eine Kommutierung nach dem sogenannten Sensorless-Prinzip.
DIR_S ... Register für das Richtungssignal.
H_A ... intern gespeicherter Wert für das zuletzt gemessene Hall-Signal H
H_E ... intern gespeicherter Wert für ein synthetisches Kommutierungssignal, mit dem der Motor 10 tatsächlich kommutiert wird und das besonders bei hohen Drehzahlen gegenüber dem Signal H phasenverschoben ist, vgl. Fig. 15a (Signal H) und Fig. 15b (Signal H_E), die gegeneinander phasenverschoben sind.
H_E_S ... Register, dessen Inhalt für die Bildung von H_E verwendet wird. Der Inhalt dieses Registers kann während mehrerer Durchläufe durch die Schleife S130 beeinflußt werden, vgl. nachfolgend die Schritte S250, S252, S268. Erst wenn dieser Inhalt feststeht, wird er zu einem durch das Programm festgelegten Zeitpunkt (vgl. die nachfolgenden Schritte S232, 238 und S268) in H_E übernommen, um die Kommutierung des Motors optimal zu steuern.
SW ... Schwellwert.
   Dieser Schwellwert kann verschiedene Werte SWₙ annehmen, z.B. SW₁ bis SW₁₄, die ggf. beim Anlauf zyklisch solange durchlaufen werden, bis der Motor startet.
IWZ ... Istwertzähler.
   Dieser mißt die Zeit T zwischen zwei Signalwechseln K (Fig. 5). Diese Zeit ist ein Maß für den tatsächlichen Wert der Drehzahl, also den Drehzahl-Istwert. Mit zunehmender Drehzahl nimmt diese Zeit T ab.
Z_A ... Register, das den bei der vorhergehenden Messung im IWZ erfaßten Wert zwischenspeichert .
ALZ ... Anlaufzähler. Dieser zählt die Zahl der Signalwechsel K des Signals H (Fig. 5) beim Anlauf, wobei die Zählung nur unter bestimmten Voraussetzungen erfolgt, nämlich nur bei DIR_S = DIR.
C ... Konstante
K1 ... Konstante für die Zündwinkelverschiebung beim Vorwärtslauf 14.
K2 ... Konstante für die Zündwinkelverschiebung beim Reversbetrieb 40.

In Fig. 7 geht das Programm - hier nach einem PU-Reset (der bei Fig. 6 beschrieben wurde) - zu einem Schritt S110, wo der Mikroprozessor 70 initialisiert wird. Dies dient zur Definition von Variablen und Konstanten, welche für den Ablauf des nachfolgenden Programms vorgegeben werden müssen.

Im Schritt S112 erfolgt der erste Teil der Initialisierung. Hierbei wird das Signal DIR (am Port B0) in das Register DIR_S geladen, welches das richtungsanzeigende Bit enthält, mit dem die Kommutierung arbeitet. Dies ist zweckmäßig, damit die Anlaufsteuerung sofort mit dem Start in der richtigen Richtung beginnen kann.

Ferner wird in S112 das Register MOT_ST ("Motor steht") gesetzt, damit nach einem PU-Reset sofort die Startroutine beginnen kann. Außerdem wird der (variable) Schwellwert SW mit einem konstanten Wert besetzt, z.B. einem Wert SW₁ = 400 ms, wobei hier diese Zeit in internen Zeiteinheiten des Systems vorgegeben werden kann, also nicht in Millisekunden, sondern z.B. in Einheiten von 80 µs.

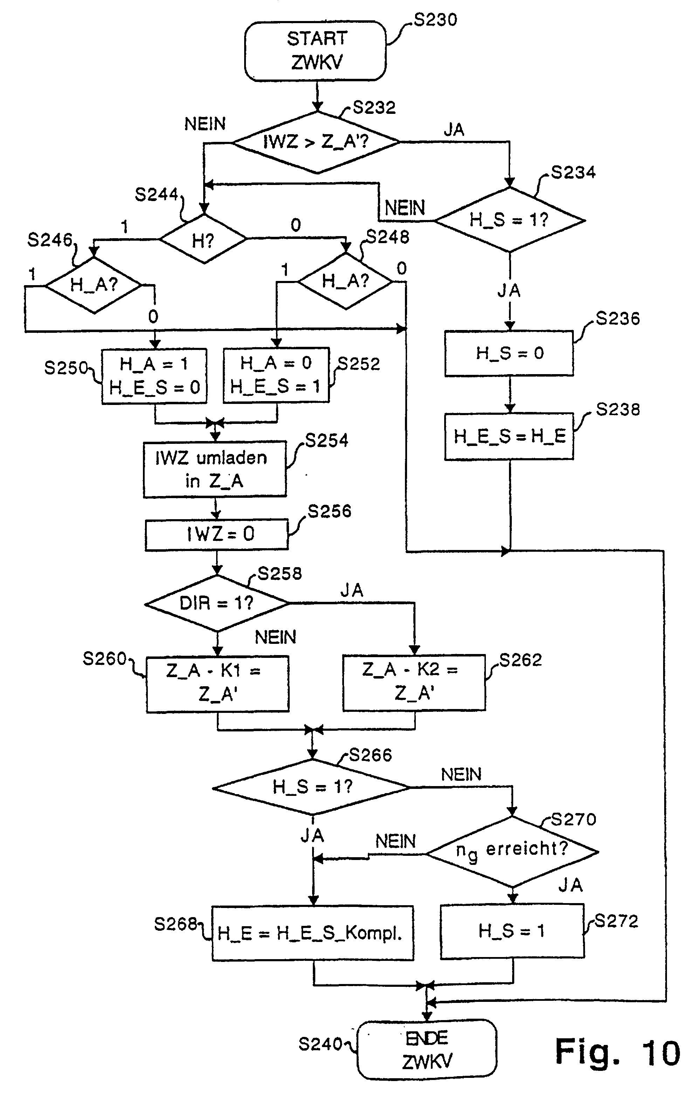

Im Schritt S114 wird das Register Z_A ("Zähler-Alt") auf seinen maximalen Wert eingestellt, damit die Einstellung des sogenannten Zündwinkels richtig arbeiten kann. Der Begriff des Zündwinkels und der Zündwinkelverschiebung wird weiter unten bei Fig. 10 erläutert.

Außerdem wird der Wert H abgefragt, also das Rotorstellungssignal vom Sensor 25, und sein Komplementärwert H_Kompl. wird gebildet. Die Register H_E und H_A werden auf diesen Komplementärwert eingestellt. Dadurch wird eine Kommutierung K vorgetäuscht, also ein Wechsel des Signals H, damit die Verschiebung des Zündwinkels sofort arbeiten kann. Ferner wird der Zähler IWZ auf 0 rückgestellt.

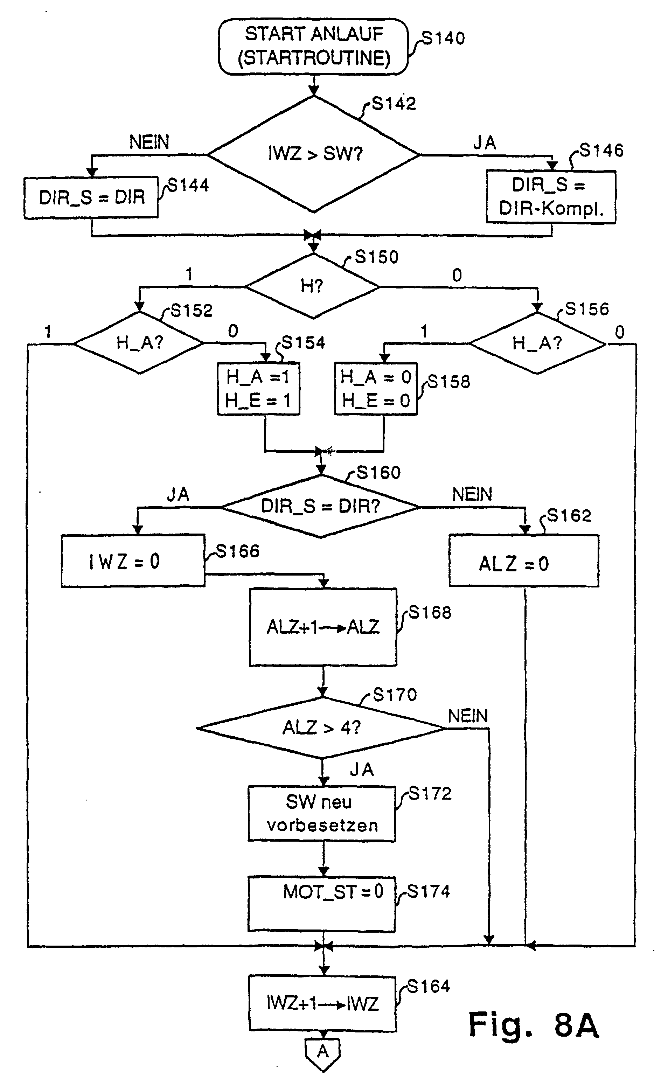

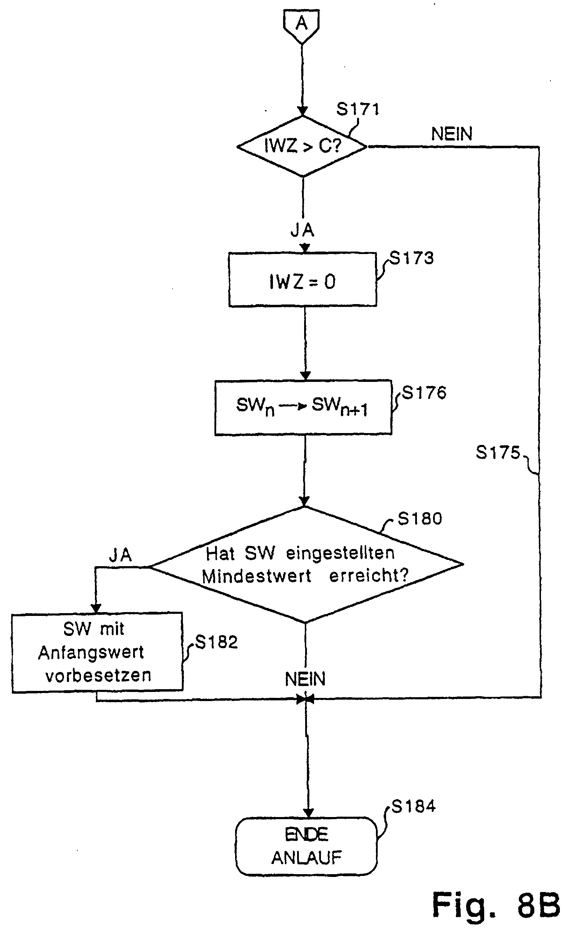

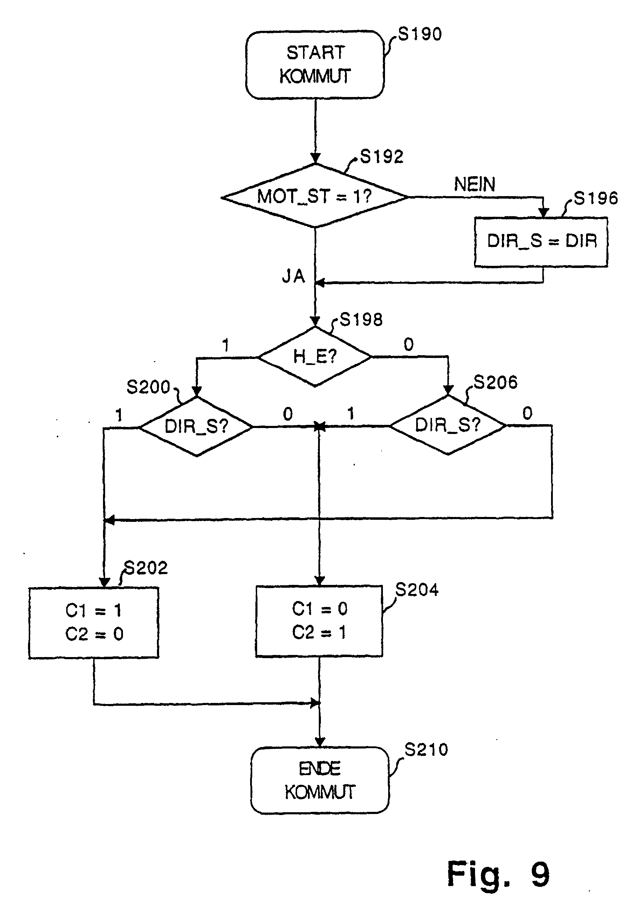

Anschließend geht das Programm zum Schritt S116, der bereits ein Teil des Hauptprogramms ist. Dort wird das Register MOT_ST abgefragt. Ist es gesetzt (vgl. S112), so geht das Programm zum Schritt S118, also der Startroutine bzw. Anlaufsteuerung, die nachfolgend anhand von Fig. 8A und 8B beschrieben wird. Anschließend geht das Programm in diesem Fall direkt zum Schritt S120, also der Kommutierung, die nachfolgend anhand von Fig. 9 beschrieben wird, wobei ggf. ein oder mehrere NOP-Befehle S136 vorgesehen werden können, deren Zweck nachfolgend erläutert wird.

Ist die Startroutine (S118) erfolgreich, d.h. der Motor 10 läuft an, so wird das Register MOT_ST rückgesetzt, also MOT_ST=0, so daß beim nächsten Programmdurchlauf der rechte Zweig von Fig. 7 durchlaufen wird.

Der rechte Zweig von Fig.7 kann bei S124 einen Drehzahlregler enthalten (dieser ist Gegenstand der deutschen Patentanmeldung 195 45 109.0 vom 4. Dez. 1995), doch ist in vielen Fällen keine Drehzahlregelung erforderlich, und dann entfällt dieser Schritt.

Im Schritt S126 wird die Zündwinkelverschiebung vorgenommen, die nachfolgend anhand von Fig. 10 erläutert wird. Diese bildet das synthetische Signal H_E ("Hall-Ersatz"), mit dem die Kommutierung des Motors 10 bei höheren Drehzahlen arbeitet. Je nach der eingestellten Drehrichtung kann H_E nach unterschiedlichen Regeln gebildet werden, wie nachfolgend erläutert.

Im Schritt S128 wird der Zähler IWZ um den Wert 1 erhöht, d.h. die Zahl der Durchläufe durch die Programmschleife S130 wird in IWZ gezählt.

Im Schritt S132 wird abgefragt, ob ein Überlauf des Zählers IWZ vorliegt. Ein solcher Überlauf bedeutet, daß sich der Motor 10 nicht (mehr) dreht, denn wie bereits beschrieben, mißt IWZ die Zeit T (Fig. 5) zwischen zwei Wechseln K des Signals H, und im Schritt S126 wird der Zähler IWZ bei jedem Signalwechsel K auf Null zurückgestellt (Reset dieses Zählers), vgl. den Schritt S256 in Fig. 10. Wenn also im Schritt S132 ein Überlauf festgestellt wird, wird im Schritt S134 das Register MOT_ST wieder gesetzt, um die Startroutine (S118) erneut zu aktivieren.

Im Schritt S120 wird kommutiert (Fig. 9), gesteuert durch die Signale H_E. Anschließend geht das Programm über S130 zurück zum Schritt S116, d.h. es handelt sich um eine Endlosschleife, die ggf. unterbrochen wird durch zyklische Resetvorgänge, vgl. hierzu die europäische Patentanmeldung 94 118 728.8.

Der Durchlauf durch eine komplette Schleife S130 dauert mit Vorteil eine konstante Zeit, was ggf. durch NOP-Befehle erreicht wird, von denen einer bei S136 symbolisch angedeutet sind. Dies sind inerte Befehle, die nur Zeit verbrauchen, aber keinen Effekt haben, so daß der Durchlauf durch die Schleife S130 über den linken Zweig von Fig. 7 gleich lang dauert wie der Durchlauf durch den rechten Zweig, z.B. in beiden Fällen 80 µs. Dies erlaubt eine Zeitmessung durch Zählung der Zahl der Schleifendurchläufe im Zähler IWZ. Auf diese Weise kann der tatsächliche Wert der Drehzahl des Motors sehr leicht, und ohne zusätzliche Maßnahmen, gemessen werden. In der Praxis ist es vor allem wichtig, daß der Durchlauf durch den rechten Teil der Fig. 7, gleich auf welchem Weg, stets gleich lang dauert, während dies bei der Startroutine S118 zwar wünschenswert, aber weniger wichtig ist.

Die **Fig. 8A und 8B** zeigen die Anlaufsteuerung (Startroutine) gemäß dem Schritt S118 der Fig. 7, Wie bei Fig. 3 bis 5 erläutert, war bisher bei zweipulsigen Motoren ein zuverlässiger Anlauf in der Reversrichtung nicht möglich, weil solche Motoren, egal welcher Bauart, für den Anlauf in ihrer Vorzugsrichtung optimiert sind. Die Startroutine gemäß Fig. 8 erlaubt einen sicheren Start in beiden Drehrichtungen.

Schritt S140 ist die Stelle des Einsprungs aus dem Hauptprogramm, also in Fig. 7 im Anschluß an S116. Als erstes wird in S142 geprüft, ob IWZ größer als die (zuvor festgelegte) Variable SW ist. Ist dies nicht der Fall, so wird in S144 DIR_S = DIR gesetzt, d.h. das Signal DIR am Port B0 (Fig. 6) bestimmt die Drehrichtung, für die der Motor 10 (im Schritt S120) Strom erhält, so daß ein Drehmoment in dieser vorgegebenen Richtung erzeugt wird, indem der betreffende Strang 20 oder 21 des Motors 10 einen Strom i₁ bzw. i₂ (Fig. 6) erhält, wie nachfolgend bei Fig. 9 erläutert. Dadurch erhält der Motor 10 ein elektromagnetisches Drehmoment Mₑₗ in der gewünschten Drehrichtung, die am Port B0 des Mikroprozessors 70 (Fig. 6) vorgegeben wurde.

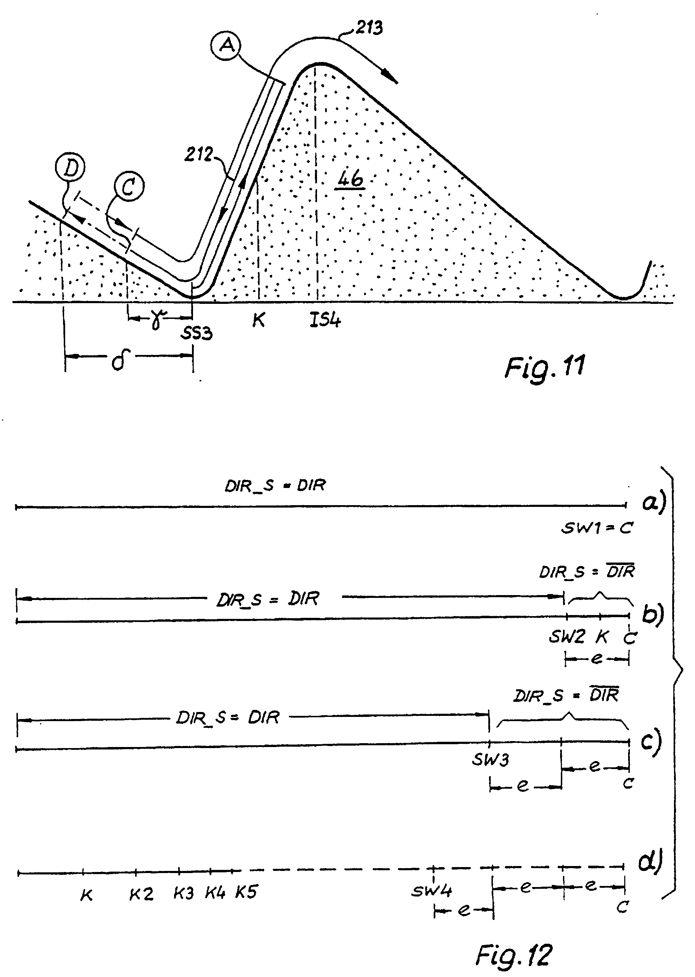

Ist IWZ größer als die Variable SW (Schritt S146), was in der Praxis bedeutet, daß der Motor nicht rotiert, nimmt DIR_S den Komplementärwert des Signals DIR am Port B0 an, d.h. wenn z.B. B0="1" ist, so wird DIR_S im Schritt S146 auf "0" gesetzt. Dies bedeutet, daß der Motor (im Schritt S120) Strom für eine Drehung erhält, die entgegengesetzt zu der gewünschten Drehrichtung ist, die am Port B0 eingestellt wurde. Der Sinn dieser Maßnahme, nämlich die Erzeugung einer gesteuerten Zwangsoszillation des Rotors 11 im Bereich um seine derzeitige Ruhestellung, wird nachfolgend anhand der Fig. 11 und 12 erläutert.

Im Schritt S150 wird (im Anschluß an S144 oder S146) das Signal H abgefragt, das in Fig. 5b dargestellt ist, also das (echte) Ausgangssignal des Hall-IC 25. Ist dieses hoch, so folgt S152, wo H_A abgefragt wird, also der Altwert von H, der bei der Initialisierung, also vor dem Start, in S114 vorgegeben wird und der bei jedem Wechsel des Signals H aktualisiert (updated) wird.

Ist H = 1 und H_A = 0, so bedeutet dies, daß ein Signalwechsel K (Fig. 5) stattgefunden hat, und im Schritt S154 wird deshalb H_A auf den neuen Wert "1" aktualisiert, ebenso H_E, da beim Anlauf die Werte von H_A und H_E übereinstimmen. Die Register H_A und H_E stellen sicher, daß nur einmal auf einen Wechsel des Signals H reagiert wird, welcher Wechsel (beim Start) eine Kommutierung K bedeutet, wie nachfolgend anhand von Fig. 9 erläutert.

Völlig analog wird bei H=0 im Schritt S156 festgestellt, ob sich das Signal H von "1" nach "0" geändert hat, und wenn dies der Fall ist, wird im Schritt S158 das Register H_A auf "0" gesetzt, ebenso das Register H_E. Die Schritte S150, 152, 156 sind als Binärbaum ausgebildet und dienen dazu, beim Start des Motors einen Signalwechsel K zu erkennen. Die Signale H_A und H_E bleiben bis zur nächsten Änderung gespeichert.

Sofern die Antwort bei S152 "1" oder bei S156 "0" ist, geht das Programm direkt zum Schritt S164, der nachfolgend beschrieben wird.

Im Anschluß an die Schritte S154, S158 wird im Schritt S160 abgefragt, ob das Register DIR_S den Wert von DIR hat, vgl. hierzu die Schritte S144 und 146. Zur Erinnerung: DIR_S = DIR bedeutet, daß der Motor 10 gerade den Start in der gewünschten Drehrichtung versucht, also einen entsprechenden Strom im Strang 20 oder 21 erhält. DIR_S≠DIR (S146) bedeutet, daß der Motor 10 Strom für eine Drehrichtung entgegengesetzt zur gewünschten Drehrichtung erhält und deshalb im Augenblick in der "falschen" Drehrichtung angetrieben wird.

Wenn DIR_S ≠ DIR ist, also der Motor in der "falschen" Drehrichtung angetrieben wird, kann der Startversuch nicht erfolgreich gewesen sein, und deshalb wird im Schritt S162 der Anlaufzähler ALZ auf 0 zurückgestellt. (Dieser Zähler zählt die in Fig. 5 dargestellten Signalwechsel K, aber nur unter der Bedingung, daß ständig DIR_S = DIR ist, also nur dann, wenn der Motor ständig Strom für die Drehung in der gewünschten Drehrichtung erhält. Jedesmal, wenn der Motor zur Erzeugung einer Zwangsoszillation Strom für eine Drehung entgegen der gewünschten Drehrichtung erhält, wird ALZ auf 0 rückgestellt). Im Anschluß an S162 springt das Programm direkt zum Schritt S164, wo IWZ um 1 erhöht wird.

Hat das Register DIR_S den gleichen Inhalt wie das Signal DIR am Port B0, so geht das Programm zum Schritt S166, wo IWZ auf 0 zurückgestellt wird, d.h. ein Wechsel K des Hallsignals H hat stattgefunden, und deshalb ist gemäß Fig. 5b die Messung der Zeit T abgeschlossen und beginnt ab dem Signalwechsel K von neuem, also bei IWZ=0. (Während der Startroutine entspricht ein Signalwechsel K einer Kommutierung des Motorstroms im Schritt S120.)

Danach wird im Schritt S168 der Anlaufzähler ALZ um den Wert 1 erhöht. Hierzu wird auf Fig. 5 verwiesen, die den Start in Reversrichtung 40 zeigt. Befindet sich der Rotor 11 an der Drehstellung 54, so hat ALZ den Wert 1. Befindet er sich an der Drehstellung 62, so hat ALZ den Wert 3. (Dies gilt naturgemäß genauso für den Start in der Vorzugsrichtung 14.)

Anschließend wird ALZ im Schritt S170 abgefragt. ALZ > 4 bedeutet gemäß Fig. 5, daß der Rotor 11 fünf der (symbolischen) "Berge" 50, 56, 60 etc. überwunden hat, und zwar ausschließlich während Zeiten, in denen DIR_S = DIR war, d.h. daß fünf Signalwechsel K während dieses Zustands gezählt wurden, daß aber kein Signalwechsel K während einer Zeit stattgefunden hat, während der DIR_S ≠ DIR war. Dies bedeutet, daß der Motor 10 gestartet ist, und deshalb wird in S172 die Variable SW neu vorbesetzt, also ein neuer Anfangswert für SW in das betreffende Register geladen, damit bei einem nachfolgenden Stillstand des Motors 10 (z. B., wenn dieser von Hand angehalten wird) die Anlaufsteuerung wieder definiert von Anfang an arbeiten kann, nämlich ab SW₁. Dies ist also dann dieselbe Variable SW wie im Schritt S112. - Da der Motor 10 jetzt läuft, wird in S174 das Register MOT_ST auf 0 rückgesetzt, damit im Schritt S116 (Fig. 7) die Startroutine (S118) nicht mehr erneut gestartet wird.

Der Schritt S164 wird im Verlauf der Startroutine von überall her erreicht. Hier wird IWZ um 1 erhöht, und nachfolgend wird IWZ ggf. (bei einem Startversuch) in einem Schritt S171 mit einem konstanten Wert C verglichen, der z.B. einer Zeit von 400 ms entspricht, aber in internen Zeiteinheiten des Mikroprozessors 70, nämlich der Zahl von Durchläufen durch die Endlosschleife S130 (Fig. 7).

Ist IWZ kleiner als der Wert C, so springt das Programm über den Zweig S175 direkt zum Ende der Anlaufsteuerung, also dem Schritt S184. (Der Zweig S175 kann aus den erläuterten Gründen NOP-Befehle enthalten, doch sind diese bei der Startroutine nicht so wichtig.)

Ist IWZ größer als der Wert C, so bedeutet dies, daß der Motor 10 nicht gestartet ist, vielmehr sich (durch den Schritt S146) - ab dem Wert SW₂ - entgegen der gewünschten Richtung gedreht hat, um sozusagen "Anlauf für den Start zu holen", und daß der Motor nun wieder auf die vom Benutzer eingestellte Drehrichtung DIR umgeschaltet werden muß. Dabei wird im Schritt S173 der Zähler IWZ auf 0 rückgestellt, und im Schritt S176 wird die Variable SWₙ - vorausschauend - auf den nächstniedrigen Wert SWₙ₊₁ eingestellt.

Wurde die Variable SW in S176 auf den niedersten zugelassenen Wert eingestellt, z.B. auf SW₁₄, so wird dies im Schritt S180 erkannt und im Schritt S182 korrigiert, indem für SW wieder der Anfangswert (vgl. S112) verwendet wird, also z.B. SW₁. Dies ist notwendig, damit bei einem Anlaufversuch die Zeit, während deren der Motor versucht, in der gewünschten Richtung anzulaufen, stets größer bleibt als die Zeit, während deren er beim Anlauf in der "falschen" Drehrichtung läuft.

**Fig. 9** zeigt den Ablauf der Kommutierung (S120 in Fig. 7), die beim Schritt S190 beginnt. Bei Schritt S192 wird geprüft, ob das Register MOT_ST gesetzt ist, also sich der Motor 10 in seiner Startroutine befindet, oder ob er bereits rotiert.

Sofern der Übergang in den Programmteil der Fig. 9 nicht aus der Startroutine (Fig. 8) erfolgte, also MOT_ST = 0 ist, wird im Schritt S196 zur Sicherheit das Signal DIR_S korrigiert, also DIR_S = DIR, d.h. der am Port B0 vorgegebene Drehrichtungsbefehl DIR wird in das interne Register DIR_S übernommen, damit der Motor 10 in der gewünschten Drehrichtung weiterläuft. Dies wird bei jedem Durchlaufen der Schleife S130 (Fig. 7) überprüft und stellt eine vorteilhafte Sicherheitsmaßnahme dar.

Im Schritt S198 wird das Signal H_E abgefragt, das beim Anlauf in S154 und S158 definiert wurde und das bei laufendem Motor gemäß Fig. 10 erzeugt wird. Dies ist ein synthetisches Signal für die Steuerung der Kommutierung.

Ist H_E = 1, so wird im Schritt S200 geprüft, ob DIR_S = 0 oder = 1 ist. Ist DIR_S=1, so geht das Programm zum Schritt 202, und dort wird der Port C1 des Mikroprozessors 70 hoch gemacht, so daß der Transistor 92 eingeschaltet wird und der Strang 20 einen Strom i₁ erhält. Ist DIR_S=0, so wird im Schritt S204 der Port C2=1 gemacht, so daß der Transistor 96 eingeschaltet wird und der Strang 21 einen Strom i₂ erhält. Der andere der beiden Stränge ist jeweils stromlos, d.h. bei S202 ist der Port C2 = 0, und bei S204 ist der Port C1 = 0.

Ist im Schritt S198 H_E = 0, so wird im Schritt S206 ebenfalls geprüft, ob DIR_S = 0 oder 1 ist. Bei DIR_S = 1 folgt Schritt S204, und bei DIR_S=0 Schritt S202, die beide bereits beschrieben wurden.

Das Programm arbeitet also mit einem synthetischen Signal H_E für die Steuerung der Kommutierung, und abhängig von der eingestellten Drehrichtung DIR (Schritte S200, S206) steuert dieses Signal den Strom durch die Stränge 20, 21 so, daß sich die gewünschte Bestromung und damit die gewünschte Drehrichtung ergibt. - Die Werte an den Ports C1 und C2 des Mikroprozessors 70 bleiben jeweils bis zum nächsten Durchlauf durch die Schleife S130 gespeichert.

Im Anschluß an S202, 204 folgt der Schritt S210, d.h. die Kommutierung ist dann abgeschlossen, und gemäß Fig. 7 geht das Programm in der Schleife S130 (Fig. 7) zurück zum Schritt S116.

### Arbeitsweise von Fig. 7 und 8

Bei der Initialisierung (S112) nach dem Einschalten des Motors 10 wird das Register MOT_ST im Mikroprozessor 70 gesetzt, und die Variable SW wird beispielsweise zunächst auf den Wert SW₁=C (S171) gesetzt. Das Programm geht deshalb im Schritt S116 der Fig. 7 in den linken Zweig, also die Startroutine S118, deren Aufbau in den Fig. 8A und 8B dargestellt ist. In ihr wird bei jedem Durchlaufen der Schleife S130 im Schritt S142 geprüft, ob IWZ den Wert SW_{ν} bereits erreicht hat.

Anschließend wird in Fig. 8A der mittlere Teil immer nur dann durchlaufen, wenn in den Schritten S150, 152, 156 ein Wechsel K des Rotorstellungssignals H (Fig. 5) festgestellt wurde.

Ein Signalwechsel K bei Antrieb in der gewünschten Drehrichtung (S160, linker Ausgang) bewirkt bei der Startroutine eine Rückstellung von IWZ auf 0 (S166), eine Erhöhung von ALZ um 1 (S168), und eine Prüfung (in S170), ob der Anlauf stattgefunden hat, d.h. ob fünf Signalwechsel K bei Antrieb in der gewünschten Drehrichtung stattgefunden haben.

Ein Signalwechsel K bei Antrieb entgegen der gewünschten Drehrichtung bewirkt bei der Startroutine keine Rückstellung von IWZ auf 0, da dann die Antwort im Schritt S160 NEIN lautet und folglich im Schritt S162 der Zähler ALZ rückgestellt wird.

Wird kein Signalwechsel K bei Antrieb in der gewünschten Drehrichtung festgestellt, so wird in S171 (Fig. 8B) geprüft, ob IWZ bereits den Wert C erreicht hat, und es folgen ggf. die Vorgänge, die bei S173, 176, 180 und 182 beschrieben wurden. Wenn nämlich innerhalb der Zeit C, z.B. 400 ms, kein Signalwechsel K bei Antrieb in der gewünschten Drehrichtung festgestellt wurde (dieser hätte im Schritt S166 den Zähler IWZ auf 0 rückgestellt), zeigt dies, daß der Motor noch nicht rotiert, sondern sich in der Phase seiner gesteuerten Zwangsoszillation befindet, so daß die Startroutine S118 (Fig. 7) entsprechend modifiziert werden muß, um beim nächsten Versuch die Amplitude der Zwangsoszillation zu vergrößern und die Chancen eines Anlaufs zu verbessern. Dies geschieht durch Verwendung eines neuen Werts SWₙ₊₁.

Wird bei der Startroutine im Schritt S142 festgestellt, daß IWZ den eingestellten Schwellwert SW_{ν} erreicht hat, z.B. SW₁ = 400 ms (anschließend SW₂ = 380 ms, SW₃ = 360 ms, etc.), so heißt dies z.B., daß
a) entweder ab dem Einschalten des Motors innerhalb der durch den Wert SW vorgegebenen Zeit keine Kommutierung bei Antrieb in der gewünschten Richtung stattgefunden hat, oder
b) daß seit der letzten Kommutierung K innerhalb der Zeit SW_{ν} keine neue Kommutierung stattgefunden hat,
so daß der Rotor 11 z.B. an der Stelle A der Fig. 11 "hängt" und sich nicht weiter dreht.

In diesem Fall wird im Schritt 146 das Drehrichtungssignal DIR_S invertiert, d.h. der Motor 10 erhält ab dem Zeitpunkt IWZ = SW_{ν} den Befehl, in der "falschen" Drehrichtung zu laufen, was die bereits erläuterte Zwangsoszillation bewirkt.

Direkt nach dem Anlauf ist z.B. SW₁ = C, d.h. zunächst wird - aus den zuvor erläuterten Gründen - ein Anlauf ohne eine solche Reversierung versucht, und am Ende dieses Vorgangs wird, sofern der Motor nicht angelaufen ist, im Schritt S173 IWZ auf 0 rückgestellt, und die Schwelle SW wird auf SW₂ eingestellt (S176), wie in Fig. 12b dargestellt.

Der Motor wird dann beim nächsten Zyklus (mit diesem neuen Überwachungswert SW₂ von z.B. 380 ms) in der gewünschten Drehrichtung angetrieben (S142, 144), wobei er z.B., unter Kommutierung an der Stelle K, wieder bis zur Stellung A (Fig. 11) gelangt, und die restlichen 20 ms wird er (S146), bis IWZ = C ist (S171), in umgekehrter Richtung angetrieben, wie in Fig. 11 durch die Linie 212 angedeutet, wobei er z.B. bis zur Stellung C gelangt, die in Fig. 11 um einen Winkel γ links von SS3 liegt.

Dadurch "holt der Motor Anlauf", d.h. beim nächsten Startversuch erhält er während dieses zusätzlichen Winkelbereichs γ (Fig. 11) einen Strom und folglich ein elektromagnetisches Drehmoment Tₑₗ für die gewünschte Drehrichtung und kann dabei gemäß Linie 213 der Fig. 11 möglicherweise die Hürde des bremsenden Reluktanzmoments 46 überwinden.

Ist dies auch jetzt noch nicht der Fall, so wird beim nächsten Versuch die Variable SW_{ν} auf einen noch niedrigeren Wert gesetzt, z.B. auf SW₃ = 360 ms, so daß der Motor beim Rückwärtslaufen 40 ms lang Strom erhält, wobei auch hier an der Stelle K eine Kommutierung erfolgt, aber keine Rückstellung von IWZ, da DIR_S≠DIR ist (S160) und der Schritt S166 deshalb nicht erreicht wird. Deshalb gelangt der Rotor 11 bis zur Drehstellung D (Fig. 11) und erhält folglich beim nächsten Startversuch während eines noch größeren Drehwinkels δ Strom für die gewünschte Drehrichtung und läuft umso sicherer an.

Die Drehstellungen C, D sind auch in Fig. 4 eingezeichnet, d.h. die Startstellung SS3 wird durch diese Zwangsoszillationen (mit zunehmender Amplitude) immer weiter nach links verlegt, z.B. von 150° el. zu 130° el., dann zu 110° el. etc, bis schließlich fast die instabile Startstellung IS3 erreicht ist, aus der auf jeden Fall ein sicherer Anlauf möglich ist.

In der Praxis hat dies die Wirkung, daß beim Start in der Reversrichtung der Motor 10 nur sehr selten direkt anläuft, in den meisten Fällen aber - durch die beschriebene Zwangsoszillation - zuerst kurz hin- und herpendelt und erst dann anläuft. Dies gilt auch dann, wenn der Rotor hierbei gebremst wird, z.B., wenn man bei einem Lüfter versucht, den Rotor 11 mit der Hand festzuhalten.

Wie in Fig. 5a dargestellt, könnte es auch vorkommen, daß der Motor 10 aus der Stellung SS3 (links in Fig. 5a) normal anläuft und bis zur Drehstellung 62 gelangt, also eine volle Umdrehung von 360° el. macht und dann "hängenbleibt", weil er nicht genügend "Schwung" bekommen hat.

Bei der Drehung von SS3 nach SS4 wird durch die Startroutine ein Signalwechsel K festgestellt (Schritte S150, 152, 156), und dieser führt bei S166 zur Rückstellung von IWZ, bei S168 zur Erhöhung des Zählers ALZ auf den Wert 1, bei S164 zur Erhöhung des (zuvor rückgestellten) Zählers IWZ von 0 auf 1, und in Fig. 9 zu einer entsprechenden Kommutierung mit den Werten H_E aus S154 oder 158. Der Wert SW (aus S112) wird hierbei nicht verändert, da das Programm über den Weg S175 (Fig. 8B) an den Schritten S173, S176, S180, S182 vorbeigeht.

Dasselbe gilt für die anschließende Drehung des Rotors 11 von SS4 nach SS3 (Fig. 5a). Hierbei findet erneut - beim Signalwechsel K - eine Kommutierung des Stromes im Motor 10 statt; IWZ wird erneut auf 0 rückgestellt, und ALZ wird im Schritt S168 auf den Wert 2 erhöht.

Im Anschluß an die Rotorstellung SS3 (rechts in Fig. 5a) läuft der Rotor 11 bei diesem Beispiel noch bis zur Drehstellung 62, wodurch erneut eine Kommutierung K bewirkt wird, d.h. in S166 wird erneut der Zähler IWZ auf 0 rückgestellt, in S168 wird der Zähler ALZ auf den Wert 3 erhöht, aber da nun der Rotor 11 an der Stelle 62 (Fig. 5a) "hängt" und sich nicht mehr dreht, wird nun die Schleife S130 (Fig. 7) ständig durchlaufen, wodurch der Zähler IWZ schließlich im Schritt S142 den eingestellten Wert SW erreicht, also bei SW₁ z.B. den Wert 400 ms, und anschließend im Schritt S171 (Fig. 8B) den Wert C, der in diesem Fall ebenfalls 400 ms betragen kann.

Hierdurch wird in S173 der Zähler IWZ auf 0 rückgestellt, der Wert SW₁ (400 ms) wird in S176 durch den nächstniedrigen Wert SW₂ (380 ms) ersetzt, und es erfolgt ein neuer Startversuch in der zuvor beschriebenen Weise, d.h. der Motor 10 erhält während 380 ms (Schritt S142) einen Strom für die gewünschte Drehrichtung, und wenn er während dieser 380 ms nicht startet, also innerhalb dieser Zeitspanne kein Signalwechsel K erfolgt, erhält er (S146) während der anschließenden 20 ms einen Strom für Drehung entgegengesetzt zur gewünschten Drehrichtung, so daß also automatisch die Zwangsoszillation wieder einsetzt, wobei durch den Signalwechsel K während der von der Stelle 62 (Fig. 5A) ausgehenden Drehung entgegen der gewünschten Drehrichtung automatisch (durch die Schritte S160, 162) der Zähler ALZ auf 0 gestellt wird und dann neu zu zählen beginnt, wenn der Motor in der gewünschten Drehrichtung startet. Außerdem bewirkt dieser Signalwechsel K auch die Kommutierung bei der Drehung entgegen der gewünschten Drehrichtung (S150, 152, 156).

Erst wenn der Rotor 11 - bei DIR_S=DIR (S160), also bei Drehung in der gewünschten Richtung - fünf Wechsel K des Signals H bewirkt hat, erreicht der Anlaufzähler ALZ den Wert 5, und in den Schritten S170, 172, 174 wird dann die Startroutine beendet, indem MOT_ST=0 gesetzt wird.

Solange also ALZ < 5 ist, wird der Anlauf durch die Startroutine S118 ständig überwacht, und falls der Motor nicht anläuft, werden die Startversuche wiederholt.

Um eine Überhitzung zu vermeiden, wenn der Rotor 11 beim Start blockiert ist und sich nicht drehen kann, kann eine sogenannte Blockiersicherung vorgesehen werden, d.h. wenn die thermische Belastung des Motors 10 zu hoch wird, wird dieser z.B. während 10 oder 20 Sekunden ausgeschaltet und wiederholt erst dann die Anlaufversuche. Eine entsprechende Anordnung ist Gegenstand der deutschen Patentanmeldung 195 47 216.0 vom 18. Dezember 1995.

Während der Dauer der Startroutine S118 wird also der Anlauf dadurch überwacht, daß festgestellt wird, ob innerhalb der (variablen) Zeit SW oder innerhalb der (konstanten) Zeit C eine Kommutierung stattfindet, und ob diese Kommutierung während DIR_S=DIR stattfindet, oder während DIR_S≠DIR. Die Anlaufroutine wird erst abgeschaltet, wenn mit ALZ=5 (S170) ein Kriterium vorliegt, bei dem angenommen werden kann, daß der Motor 10 sicher angelaufen ist.

Wenn der normal rotierende Motor durch äußere Einflüße blockiert wird, tritt ein Überlauf von IWZ auf (Fig. 7: S132), und dadurch wird automatisch im Schritt S134 die Startroutine wieder eingeschaltet, d.h. das Register MOT_ST wird wieder gesetzt, und der bereits ausführlich beschriebene Startvorgang wiederholt sich, d.h. in Fig. 7 wird wieder der linke Zweig S118 des Flußdiagramms durchlaufen.

Es ist auch darauf hinzuweisen, daß es vor allem wichtig ist, für den Durchlauf durch den rechten Zweig von Fig. 7 (S124, 126, 128, 132) und den Schritt S120 insgesamt stets dieselbe Zeit zu benötigen, unabhängig davon, auf weichem Weg dieser Durchlauf erfolgt, während dies für die Startroutine S118 zwar wünschenswert, aber nicht unbedingt notwendig ist, denn diese wird nur innerhalb von Sekunden nach dem Start des Motors wirksam, so daß exakte Durchlaufzeiten durch die Schleife S130 bei der Startroutine S118 weniger wichtig sind als beim kontinuierlichen Lauf des Motors, wo diese Durchlaufzeiten für interne Meßvorgänge des Programms verwendet werden, vgl. S254, 260, 262 in Fig. 10.

### Die Zündwinkelverschiebung

Beim Motor nach Fig. 1 ist der Rotorstellungssensor 25 in einer Pollücke angeordnet, also in Fig. 1 bei 0° el., und ein Wechsel K des Hallsignals H wird folglich erzeugt bei 0° el., 180° el., 360° el. etc.

Bei schnellaufenden Motoren ist es jedoch zur Optimierung der Leistung und des Wirkungsgrads notwendig, den Rotorstellungssensor 25 entgegen der Drehrichtung (14 in Fig. 1) um einige Grad zu versetzen, z.B. an die in Fig. 1 mit 25' bezeichnete Stelle. Man kann dann - analog zu einer Brennkraftmaschine - von einer Frühzündung sprechen, weil die Ströme i₁ und i₂ (Fig. 6) hierdurch etwas früher eingeschaltet werden. Dies ist vor allem bei hohen Drehzahlen vorteilhaft und ermöglicht bei diesen eine höhere Leistung und einen besseren Wirkungsgrad. (Naturgemäß wird bei einem solchen Motor nichts "gezündet".)

Eine Versetzung des Rotorstellungssensors 25 an die Stelle 25' würde jedoch bei umgekehrter Drehrichtung (40 in Fig. 3) eine Spätzündung bedeuten, d.h. der Motor 10 hätte dann bei Betrieb in der Reversrichtung eine schlechte Leistung und einen schlechten Wirkungsgrad. Außerdem wäre es schwierig, ihn in der Reversrichtung 40 überhaupt zum Anlauf zu bringen.

Aus diesem Grund müßte man zwei Rotorstellungssensoren verwenden, einen ersten für den Betrieb in Vorzugsrichtung und einen zweiten für den Reversbetrieb, doch ist das aus Kostengründen nicht möglich. Außerdem ist es für den Anlauf wünschenswert, daß sich der Rotorstellungssensor 25 in der neutralen Zone befindet, also, wie in Fig. 1 dargestellt bei 0° el., oder bei 180° el., denn eine Frühzündung ist erst bei höheren Drehzahlen sinnvoll, während sie im Stillstand u.U. den Anlauf erschwert oder unmöglich macht.

Bei Anwendung der Erfindung ist es möglich, mit nur einem Rotorstellungssensor 25 auszukommen, dessen Signal H elektronisch so verschoben wird, daß es an Drehrichtung und Drehzahl des Motors 10 angepaßt ist. Man verwendet deshalb für die Kommutierung ein Signal H_E, also ein Ersatzsignal, das den genannten Kriterien (Drehrichtung und Drehzahl) angepaßt ist. Diese Art der Erzeugung eines winkelversetzten synthetischen Kommutierungssignals H_E eignet sich für alle Arten von elektronisch kommutierten Motoren und ist nicht auf zweipulsige Motoren beschränkt.

Der Programmteil (S126 in Fig. 7) für die Zündwinkelverschiebung ZWKV ist in **Fig. 10** dargestellt. Er wird beim Schritt S230 gestartet. Im Schritt S232 wird der Zählerstand von IWZ mit dem Wert Z_A' verglichen, der bei einem früheren Durchlauf durch die Schleife S130 in S260 oder S262 errechnet worden war.

Hat IWZ den Wert von Z_A' überschritten, so geht das Programm zum Schritt S234, wo das Register H_S (Hall-Start) abgefragt wird, welches den Zustand des synthetischen Hallsignals H_E nach jedem Wechsel des Signals H steuert. Wenn das Register H_S=1 ist, zeigt das, daß die Drehzahl des Motors 10 hoch genug ist, um mit der Zündwinkelverschiebung zu beginnen. Unterhalb einer vorgegebenen Drehzahl ng erfolgt keine Zündwinkelverschiebung (Schritte S268, 270, 272).

Ist H_S=1, so wird das Register anschließend (nach der Abfrage) im Schritt S236 rückgesetzt, also H_S=0, damit in den nächsten Durchläufen durch die Schleife S130 (Fig. 7) die Signalwechselerkennung bearbeitet werden kann, also die Schritte S244, 246 und 248.

Im Schritt S238 wird der Wert von H_E dem von H_E_S gleichgesetzt, dessen Erzeugung nachfolgend beschrieben wird (Schritte S250 und S252), d.h. bei diesem Durchlauf durch die Schleife S130 (Fig. 7) erfolgt die Kommutierung des Motors 10 durch das in S238 erzeugte Signal H_E (mit dem Wert H_E_S), ggf. modifiziert durch das Signal DIR, vgl. die Schritte S198, 200 und 206 der Fig. 9.

Nach dem Schritt S238 geht das Programm zum Schritt S240, also dem Ende der Zündwinkelverschiebung, da ja die Zündwinkelverschiebung im Schritt S238 wirksam geworden ist.

Ist in Schritt S234 H_S=0, so geht das Programm zu S244, ebenso bei einer negativen Antwort in S232. In S244 wird geprüft, welchen Wert das Signal H hat.

Dem Schritt S244 sind zwei Schritte S246 und S248 nach Art eines Binärbaumes untergeordnet, und diese sind identisch mit den Schritten S150, 152 und 156 der Fig. 8A, weshalb auf die dortige Beschreibung verwiesen wird. (Die Schritte S150, 152, 156 sind nur während der Startroutine wirksam, die Schritte S244, 246, 248 nur während des normalen Laufs des Motors.) Die Schritte S244, 246, 248 dienen der Erkennung eines Wechsels des Signals H. Dieser Wechsel ist in Fig. 5 mit K bezeichnet. Falls kein Wechsel des Signals H festgestellt wird, geht das Programm zum Schritt S240, also dem Ende der Zündwinkelverschiebung.

Erkennt der Binärbaum S244, 246, 248 einen Wechsel des Signals H, so schließt sich der Schritt S250 an, falls H von 0 zu 1 gewechselt hat. In S250 wird das neue Signal H im Register H_A gespeichert, also H_A = 1, um bei einem nachfolgenden Wechsel des Signals H diesen Wechsel erneut erkennen zu können. Das Register H_E_S nimmt den komplementären Wert von H an, also im Schritt S250 H_E_S = 0. Dieser gespeicherte Wert wird ggf. im Schritt S238 verwendet; dasselbe geschieht nachfolgend im Schritt S268, wo H_E_S durch eine Komplementbildung wieder in den Wert H verwandelt wird.

Hat sich das Signal H von 1 nach 0 geändert, so werden im Schritt S252 die analogen Änderungen vorgenommen, also H_A = 0, und H_E_S = 1. Auch dieses Signal H_E_S wird ggf. in S238 oder S268 verwendet.

Bei einem Wechsel des Signals H (dieser Wechsel ist in Fig. 5 mit K bezeichnet und wird durch die Schritte S244, 246, 248 erfaßt), ist die Messung der Zeit T beendet, die im Zähler IWZ erfolgt, und deshalb wird im Schritt S254 der Inhalt von IWZ in Z_A umgeladen und anschließend der Zähler IWZ im Schritt S256 auf 0 rückgestellt, so daß eine neue Messung von T (Fig. 5) beginnen kann. Z_A enthält also einen Meßwert T für die gerade abgelaufene Messung der Drehzahl, d.h. je höher die Drehzahl, umso kleiner dieser Wert T. (Die Rückstellung von IWZ im Schritt S166 oder 173 erfolgt nur bei der Startroutine.)

Im Schritt S258 wird die von außen vorgegebene Drehrichtung DIR abgefragt. Diese kann dem Port B0 (Fig. 6) als digitales Signal von einer äußeren Steuerung oder Regelung zugeführt werden. Je nach vorgegebener Drehrichtung geht das Programm zum Schritt S260 oder S262.

Es sei beispielhaft angenommen, daß S260 die Vorwärtsdrehung und S262 den Reversbetrieb betrifft. In beiden Fällen wird vom Zählerstand in Z_A eine Konstante abgezogen, die bei Vorwärtsbetrieb den Wert K1 und bei Reversbetrieb den Wert K2 hat, und das Resultat wird als neuer Wert in Z_A' gespeichert. (Dieser Wert Z_A' wird anschließend im Schritt S232 mit dem Inhalt des Zählers IWZ verglichen.)

Dadurch ergibt sich eine richtungs- und drehzahlabhängige Zündwinkelverschiebung, da je nach dem Zustand des Signals DIR von dem Wert Z_A entweder die Konstante K1 oder die Konstante K2 abgezogen wird, um Z_A' zu erhalten.

Bei kleinen Drehzahlen ist T (Fig. 5) lang, also der Wert im Register Z_A groß, und deshalb wird Z_A bei kleinen Drehzahlen kaum verändert, wenn K1 oder K2 abgezogen wird, d.h. Z_A' ist dann nur wenig kleiner als Z_A. Dies ist in **Fig. 13** für eine Drehzahl von 1000 n beispielhaft dargestellt.

Bei hohen Drehzahlen ist T kurz, also der Wert im Rgister Z_A klein, und deshalb wird Z_A bei hohen Drehzahlen stark verändert, wenn K1 oder K2 abgezogen wird, d.h. der Wert Z_A' unterscheidet sich stark vom Wert Z_A, wenn die Drehzahl hoch ist. Dies ist in **Fig. 14** beispielhaft für eine Drehzahl von 5000 n dargestellt. Ein Vergleich der Fig. 13 und 14 zeigt graphisch die Abhängigkeit von der Drehzahl.

Auf diese Weise wird die Verschiebung des Zündwinkels eine lineare Funktion der Drehzahl, denn der Wert Z_A entspricht der Zeit, die der Motor für eine Drehung um einen Winkel von 180° el. braucht, so daß z.B. in Fig. 13 die Frühzündung etwa 6° el. betragen würde, in Fig. 14 aber 30° el.. In der Praxis beträgt die Frühzündung bei 5000 n etwa 12 bis 15° el., d.h. die Darstellung in Fig. 13 und 14 ist - zugunsten der Anschaulichkeit - etwas übertrieben.

Man könnte die Konstanten K1 und K2 auch abhängig vom Drehzahlbereich machen, also z.B. für 0 bis 1000 U/min K1 = a, für 1000 bis 2000 U/min K1 = b, etc. Auf diese Weise könnte man, falls gewünscht, die Zündwinkelverschiebung über den gesamten Drehzahlbereich weiter optimieren. Jedoch hat sich gezeigt, daß die dargestellte Lösung in der Praxis ausgezeichnete Ergebnisse bringt.

Im Betrieb kann es vorkommen, daß ein Wechsel K (Fig. 5) des Signals H auftritt, bevor die Bedingung des Schritts S232 erfüllt ist. Dies ist z.B. möglich bei starker Beschleunigung des Motors, also beim Hochlauf nach dem Einschalten, oder als Folge von Unsymmetrien des Hallsignals H, oder durch Störimpulse. Wie sich aus den Fig. 1 und 3 ergibt, ist die Symmetrie des Signals H eine Folge der Symmetrie der Magnetisierung des Rotors 11, und wenn diese Magnetisierung unsymmetrisch ist, z.B. durch Fehler im magnetischen Material, wird auch das Signal H unsymmetrisch. Dem trägt das vorliegende Programm Rechnung.

Dabei kann im Schritt S238 das neue Signal H_E (mit dem Wert H_E_S) nicht erzeugt werden, da beim Schritt S232 die Antwort JA nicht auftritt, sondern nur die Antwort NEIN, welche bei einem Wechsel K des Signals H zu den Schritten S254, 256 ... 266 führt, d.h. es würde an sich keine Kommutierung erfolgen, da ein Wert für H_E fehlt.

Wenn in diesem Fall - aus dem (früheren) Schritt S272 - das Register H_S=1 ist, geht das Programm bei einem Wechsel K des Signals H vom Schritt S266 zum Schritt S268, und dort wird in diesem Fall für das Signal H_E der Komplementärwert von H_E_S verwendet, welcher mit dem Wert H identisch ist, vgl. die Schritte S250 und 252, d.h. der Motor wird in diesem Fall durch das "Originalsignal" H des Sensors 25 kommutiert, und eine Verschiebung des Zündwinkels findet folglich nicht statt.

Würde diese Maßnahme nicht getroffen, so würde in diesen Sonderfällen überhaupt nicht kommutiert, d.h. der Motor würde sich selbst abbremsen. Der Schritt S266 ist erforderlich, um hier zum Schritt S268 zu gelangen und eine Kommutierung des Motors - wenn auch zu einem weniger optimalen Zeitpunkt - sicherzustellen.

Ist bei S266 das Register H_S=0, so wird in S270 der Inhalt von Z_A, also die Zeit T (Fig. 5), mit einem Festwert verglichen, der einer vorgegebenen Grenzdrehzahl n_{g} entspricht, d.h. es wird geprüft, ob die Drehzahl n_{g} erreicht ist. Die Verschiebung des Zündwinkels wird erst ab dieser Grenzdrehzahl wirksam, z.B. erst ab 1000 U/min; wenn diese Grenzdrehzahl nicht erreicht ist, geht das Programm auch in diesem Fall zum Schritt S268, wo, wie bereits erläutert, für die Kommutierung das Originalsignal H verwendet wird, welches dem Komplementärwert von H_E_S entspricht.

Ist die Grenzdrehzahl n_{g} erreicht, so wird im Schritt S272 das Register H_S gesetzt, und die Information H_E_S aus den Schritten S250, 252 wird in diesem Durchlauf nicht mehr verändert. Das bisherige Signal H_E bleibt also erhalten, so daß sich bei den Schritten der Fig. 9 nichts ändert. Erst wenn der im Schritt S260 oder S262 berechnete Wert Z_A' abgelaufen ist, was, wie beschrieben, im Schritt S232 geprüft wird, wird (durch den Schritt S238) das bisherige Signal H_E ersetzt durch ein neues Signal mit dem Wert H_E_S, der zuvor in S250 oder S252 berechnet wurde. Dadurch wird also nach Ablauf dieses errechneten Wertes Z_A' durch S238 ein neues Signal H_E für die Kommutierung erzeugt, das gemäß Fig. 15b den Komplementärwert von H darstellt. Das Signal H_E liegt also zeitlich vor dem entsprechenden Signal H, d.h. die Einschaltung des Stroms im betreffenden Strang des Motors 10 erfolgt zeitlich etwas früher, also mit "Frühzündung", wobei der Winkel der Frühzündung von Drehrichtung (Signal DIR; Konstanten K1 oder K2) und Drehzahl (Signal Z_A') abhängig ist.

In Fig. 15b erkennt man, daß während der Dauer von Z_A' die Werte der Signale H und H_E übereinstimmen, nicht aber nach Ablauf von Z_A', da dann durch den Schritt S238 das Signal H_E geändert und auf den komplementärwert von H eingestellt wird. Dieses neue Signal H_E bleibt dann solange gespeichert, bis es entweder durch S238 oder durch S268 erneut geändert wird, um eine Kommutierung des Stroms im Motor 10 zu bewirken.

### Arbeitsweise der Zündwinkelverschiebung

Hierzu wird auf Fig. 15 Bezug genommen. - Unterhalb der Grenzdrehzahl n_{g} findet keine Verschiebung statt, d.h. im Schritt S268 wird in diesem Fall H_E = H gesetzt, wie soeben beschrieben.

Oberhalb von n_{g} wird im Schritt S272 das Register H_S gesetzt, und bei einem Wechsel des Signals H wird im Schritt S254 der Wert Z_A bestimmt, der der Drehzahl umgekehrt proportional ist. Von ihm wird, je nach Drehrichtung (S258) entweder die Konstante K1 (S260) oder K2 (S262) abgezogen.

Bei demjenigen Schleifendurchlauf S130 (Fig. 7), bei dem der Wert IWZ größer als Z_A' wird (S232), wird im Schritt S238 der Wert H_E_S (aus S250 oder 252) ausgegeben und bewirkt in der gleichen Regelschleife (im Schritt S120) eine Kommutierung mit der entsprechenden "Frühzündung".

In Fig. 15 wechselt zum Zeitpunkt t₁ das Signal H von 1 nach 0, und der Wert im Zähler IWZ wird ab diesem Zeitpunkt t₁ gemessen, und wenn er den Wert Z_A' erreicht hat, wird (für Drehzahlen oberhalb der Drehzahl n_{g}) im Schritt S238 H_E=1 (aus dem Schritt S252) ausgegeben.

Zum Zeitpunkt t₂ wechselt in Fig. 15 das Signal H von 0 nach 1. Ab diesem Zeitpunkt t₂ wird der Wert im Zähler IWZ gemessen, und wenn IWZ den Wert Z_A' erreicht hat, wird in S238 der Wert H_E = 0 (aus S250) ausgegeben und bewirkt eine entsprechend frühzeitige Kommutierung, also eine "Frühzündung".

Auf diese Weise erfolgt oberhalb der Drehzahl n_{g} die Kommutierung durch das Signal H_E mit Frühzündung, nämlich so, wie wenn der Sensor 25 in Fig. 1 mit zunehmender Drehzahl immer mehr entgegen der Drehrichtung 14 verschoben würde (wie bei 25' angedeutet), und genauso in Fig. 3 entgegen der dortigen Drehrichtung 40, also entgegen der Reversrichtung.

Die **Fig. 16 und 17** zeigen eine Variante der Erfindung, bei der der Start in Reversrichtung nach dem Einschalten des Motors etwas anders abläuft als der Start in Vorwärtsrichtung. Der Unterschied betrifft den Initialisierungsvorgang in Fig. 7, also die dortigen Schritte S112 und S114.

Bei Fig. 7 wird im Schritt S112 die Variable SW für beide Drehrichtungen mit dem Wert SW₁ vorbesetzt, was, wie erläutert, beim Anlauf eine kleine Verzögerung bewirkt. Diese Verzögerung wird bei der Variante nach den Fig. 16 und 17 vermieden.

Gemäß Fig. 16 wird im Schritt S112a der am Port B0 eingestellte Wert DIR (für die gewünschte Drehrichtung) in das Register DIR_S geladen und das Register MOT_ST wird gesetzt, ebenso wie im Schritt S112 von Fig. 7.

Anschließend wird im Schritt S280 die eingestellte Drehrichtung DIR abgefragt.

Soll der Motor in Vorzugsrichtung laufen (DIR=0), so wird im Schritt S282 die Variable SW mit dem Wert SW₁ vorbesetzt, welcher gemäß Fig. 12a der Konstanten C (vgl. S171) entspricht, genauso wie im Schritt S112 von Fig. 7, und der Zähler IWZ wird auf 0 rückgestellt. Der nächste Schritt S114 und das ganze nachfolgende Programm sind mit Fig. 7 identisch, weshalb hierzu auf Fig. 7 und die zugehörige Beschreibung verwiesen wird. Auch ist der Programmablauf für DIR=0 mit dem Ablauf identisch, der für Fig. 7 bereits ausführlich beschrieben wurde.

Wird im Schritt S280 festgestellt, daß DIR=1 ist, also der Motor in Reversrichtung laufen soll, so wird im Schritt S284 die Variable SW mit dem Wert SW₂ vorbesetzt, der gemäß Fig. 12b etwas kleiner ist als die Konstante C. Letztere kann z.B. den Wert 400 ms haben, und SW₂ den Wert 380 ms. Auch wird in S284 der Zähler IWZ auf den Wert SW₂ voreingestellt, also z.B. ebenfalls auf 380 ms. Anschließend geht das Programm auch in diesem Fall zum Schritt S114 weiter.

Zur Erläuterung wird auf Fig. 17 Bezug genommen. Als Ruhelage des Rotors 11 wird die Startstellung SS3 angenommen, und es wird angenommen, daß ein Start in Reversrichtung (40 in Fig. 3) gewünscht wird.

Da in diesem Fall wegen Schritt S284 der Fig. 16 der Zähler IWZ nach dem Einschalten bereits den Wert SW₂ enthält, wird im Schritt S142 (Fig. 8A) nach dem Einschalten sofort die Antwort JA erzeugt und das Programm geht direkt zum Schritt S146, wo der Komplementärwert des eingestellten Signals DIR in das Register DIR_S geladen wird, so daß bei der nachfolgenden Steuerung der Motorströme (S120 in Fig. 7; Fig. 9) der Motor 10 sofort entgegen der gewünschten Drehrichtung bestromt wird, und zwar solange, bis im Schritt S171 (Fig. 8B) der Zähler IWZ den Wert C ereicht. Dies entspricht der Zeitdauer e in Fig. 12b, also z.B. 20 ms.

Während dieser 20 ms wird also in Fig. 17 der Rotor 11 nach dem Start aus der Ruhestellung SS3 entlang des (symbolischen) Weges 290 bis zur Winkelstellung E verdreht, die auch in Fig. 4 eingezeichnet ist, und diese Verdrehung erfolgt entgegen der gewünschten Drehrichtung, also bei diesem Beispiel in der Vorzugs-Drehrichtung des Motors.

In der Stellung E wird bei S171 der Zählerstand von IWZ größer als C, und folglich wird in S173 (Fig. 8B) der Zähler IWZ auf 0 rückgestellt, und in S176 wird SW₂ durch SW₃ ersetzt. Anschließend gelangt das Programm beim nächsten Schleifendurchlauf S130 zum Schritt S142, wo nun die Antwort NEIN lautet, d.h. jetzt wird in S144 der (richtige) Wert DIR in das Register DIR_S geladen, so daß nachfolgend im Schritt S120 (bzw. Fig. 9) der Motor 10 auf die gewünschte Richtung (= Reversrichtung) umgeschaltet und der Rotor 11 in der Reversrichtung angetrieben wird, also in Fig. 17 entlang des (symbolischen) Wegs 292, wobei an der Stelle K eine Kommutierung erfolgt.

Da der Rotor 11 jetzt ab der Drehstellung E während eines Winkels ε Anlauf nehmen kann, kann er den (symbolischen) "Berg" 46, also das bremsende Reluktanzmoment 46 der Fig. 4, besser überwinden, so daß nun ein Anlauf in Reversrichtung besser möglich ist, wie in Fig. 17 angedeutet.

Erfolgt kein Anlauf, so ist der weitere Ablauf wie bei Fig. 7, d.h. beim nächsten Mal wird der Rotor 11 (beim Wert SW₃, vgl. Fig. 12c) z.B. während 40 ms entgegen der gewünschten Drehrichtung angetrieben und kann so noch besser Anlauf holen, d.h. der Winkel ε in Fig. 17 wird hierbei größer.

Je nach der Art des vom Motor 10 anzutreibenden Gegenstands könnte man für den Start in Reversrichtung im Schritt S284 auch den Wert SW₃ oder SW₄ als Anfangswert für die Variable SW und für IWZ verwenden, um eine genügend große Amplitude ε (Fig. 17) für den ersten Teil der Zwangsoszillation zu erhalten. Auch kann, falls gewünscht, im Schritt S172 die Variable SW entsprechend der eingestellten Drehrichtung vorbesetzt werden, doch ist die Lösung gemäß Fig. 8A vorzuziehen, da der Motor u.U. von seinem Benutzer reversiert wird und dann der Start mit dem Wert SW₁ auf jeden Fall einen sicheren Anlauf in beiden Drehrichtungen gewährleistet.

## Patentansprüche

1. Verfahren zum Starten eines zweipulsigen, elektronisch kommutierten Gleichstrommotors, welcher für Betrieb in einer Vorzugsrichtung ausgelegt ist, in einer von beiden Drehrichtungen, im folgenden gewünschte Drehrichtung genannt, mit folgenden Schritten:
a) nach dem Einschalten wird der Rotor des Motors durch eine Startroutine (Fig. 7: S118; Fig. 8A & 8B) - mittels alternierender Bestromung in der einen und der anderen Drehrichtung - in Zwangsoszillation um seine Ruhestellung versetzt;
b) während der Startroutine wird überwacht (Fig. 8A: S140, S160, S162; Fig. 8B: S171, S173, S176), ob der Motor anläuft;
c) wenn festgestellt wird, daß der Motor angelaufen ist (Fig. 8A: S170), wird die Startroutine verlassen (Fig. 8A: S174).

2. Verfahren nach Anspruch 1, bei welchem die Zwangsoszillation zumindest bei einem Start entgegen der Vorzugsrichtung mindestens einen Bestromungszyklus mit einer Bestromung (Fig. 17: 290) entgegen der gewünschten Drehrichtung und einer Bestromung (Fig. 17: 292) in der gewünschten Drehrichtung aufweist (Fig. 16, 17).

3. Verfahren nach Anspruch 1 oder 2, bei welchem bei jeder Folge von während der Startroutine erfolgenden, aufeinanderfolgenden Bestromungen die Zeit für die Bestromung entgegen der gewünschten Drehrichtung (Fig. 12: DIR_S=/DIR) kürzer ist als die Zeit für die Bestromung in der gewünschten Drehrichtung (Fig. 12: DIR_S = DIR).

4. Verfahren nach einem oder mehreren der Ansprüche 1 bis 3, bei welchem bei nacheinanderfolgenden, zwecks Erzeugung einer Zwangsoszillation vorgenommenen Bestromungszyklen der Startroutine das Verhältnis der Zeit für die Bestromung in der gewünschten Drehrichtung (Fig. 12: DIR_S=DIR) zur Zeit für die Bestromung entgegen der gewünschten Drehrichtung (Fig. 12: DIR_S=/DIR) verändert und insbesondere verkleinert wird (Fig. 12).

5. Verfahren nach einem oder mehreren der Ansprüche 1 bis 4, bei welchem bei nacheinanderfolgenden, zwecks Erzeugung einer Zwangsoszillation vorgenommenen Bestromungszyklen der Startroutine die Summe (C) der Zeiten für die Bestromung in der gewünschten Drehrichtung und für die Bestromung entgegen der gewünschten Drehrichtung im wesentlichen konstantgehalten wird (Fig. 12).

6. Verfahren nach einem oder mehreren der Ansprüche 1 bis 5, bei welchem während der bei der Startroutine erfolgenden Bestromung des Motors in der gewünschten Drehrichtung die Zahl der Signalwechsel (K) im Ausgangssignal (H) eines dem Motor zugeordneten Rotorstellungssensors gezählt wird (Fig. 8A: S168).

7. Verfahren nach Anspruch 6, bei welchem die Startroutine verlassen wird, wenn die Zahl der Signalwechsel (K) einen vorgegebenen Mindestwert überschritten hat (Fig. 8A: S170, S172, S174).

8. Verfahren nach einem oder mehreren der vorhergehenden Ansprüche, bei welchem während der Startroutine überwacht wird, ob der Rotor des Motors innerhalb einer vorgegebenen Zeitspanne (SW) ab dem Beginn der Bestromung in der gewünschten Drehrichtung, und/oder ab dem Durchlaufen einer vorgegebenen Drehstellung in der gewünschten Drehrichtung, eine vorgegebene Drehstellung, oder eine aus einer Mehrzahl von vorgegebenen Drehstellungen, erreicht hat.

9. Verfahren nach Anspruch 8, bei welchem während der Startroutine dann, wenn der Rotor innerhalb der vorgegebenen Zeitspanne bei Bestromung in der gewünschten Drehrichtung die vorgegebene Drehstellung, oder eine aus einer Mehrzahl von vorgegebenen Drehstellungen, erreicht hat, ab diesem Zeitpunkt erneut überwacht wird, ob der Rotor innerhalb der vorgegebenen Zeitspanne ab Durchlaufen dieser Drehstellung eine neue vorgegebene Drehstellung, oder eine aus einer Mehrzahl von vorgegebenen Drehstellungen, erreicht hat, und im Erfolgsfall dieser Überwachungsvorgang eine vorgegebene Zahl von Malen durchgeführt wird.

10. Verfahren nach Anspruch 8 oder 9, bei welchem dann, wenn der Rotor des Motors innerhalb der vorgegebenen Zeitspanne nicht die vorgegebene Drehstellung, oder eine aus einer Mehrzahl von vorgegebenen Drehstellungen, erreicht hat, die Bestromung des Motors für Antrieb entgegen der gewünschten Drehrichtung umgeschaltet wird.

11. Verfahren nach Anspruch 10, bei welchem die Bestromung für Antrieb entgegen der gewünschten Drehrichtung auf eine vorgegebene Zeitspanne (C - SW) begrenzt und der Motor (10) nach Ablauf dieser Zeitspanne erneut auf Bestromung für Antrieb in der gewünschten Drehrichtung umgeschaltet wird.

12. Verfahren nach Anspruch 11, bei welchem bei der erneuten Bestromung für Antrieb in der gewünschten Drehrichtung erneut überwacht wird, ob der Rotor des Motors innerhalb einer vorgegebenen Zeitspanne ab dem Beginn der Bestromung in der gewünschten Drehrichtung, oder ab Durchlaufen einer vorgegebenen Drehstellung in der gewünschten Drehrichtung, eine vorgegebene Drehstellung, oder eine aus einer Mehrzahl von vorgegebenen Drehstellungen, erreicht hat.

13. Verfahren nach Anspruch 12, bei welchem dann, wenn der Rotor des Motors innerhalb der vorgegebenen Zeitspanne nicht die vorgegebene Drehstellung, oder eine aus einer Mehrzahl von vorgegebenen Drehstellungen, erreicht hat, die Bestromung des Motors erneut für Antrieb entgegen der gewünschten Drehrichtung umgeschaltet wird.

14. Verfahren nach Anspruch 13, bei welchem die Zeit für eine zweite Bestromung des Motors entgegen der gewünschten Drehrichtung im Vergleich zu der für die erste Bestromung entgegen der gewünschten Drehrichtung vorgegebenen Zeit verlängert wird, um eine Zwangsoszillation mit zunehmender Amplitude zu erhalten.

15. Verfahren nach einem oder mehreren der Ansprüche 8 bis 14, bei welchem als vorgegebene Drehstellungen des Rotors solche verwendet werden, bei denen ein am Motor vorgesehener Rotorstellungssensor sein Ausgangssignal in vorgegebener Weise ändert.

16. Verfahren nach Anspruch 15, bei welchem als vorgegebene Drehstellungen des Rotors diejenigen Drehstellungen (K) verwendet werden, bei denen zumindest während der Startroutine der Statorstrom des Motors kommutiert wird.

17. Elektronisch kommutierter, zweipulsiger Gleichstrommotor (10), welcher für Betrieb in einer Vorzugsrichtung ausgelegt ist und welcher aufweist:
Einen permanentmagnetischen Rotor (11);
einen Stator (15) mit einer Statorwicklungsanordnung (20, 21);
einen diesem Motor (10) zugeordneten Mikrocontroller oder Mikroprozessor (70);
ein dem Mikrocontroller oder Mikroprozessor zugeordnetes Programm zur Ausführung folgender Schritte:
a) Nach dem Einschalten wird der Rotor (11) durch eine Startroutine (Fig. 7: S118) -- mittels alternierender Bestromung in der einen und der anderen Drehrichtung -- in Zwangsoszillation um seine Ruhestellung versetzt;
b) während der Startroutine wird überwacht (Fig. 8A: S140, S160, S162; Fig. 8B: S171, S173, S176), ob der Motor (10) anläuft;
c) wenn festgestellt wird, dass der Motor angelaufen ist (Fig. 8A: S170), wird die Startroutine verlassen (Fig. 8A: S174).

18. Verfahren nach einem der Ansprüche 1 - 16 zum Starten eines zweipulsigen, elektronisch kommutierten Gleichstrommotors, welcher für Betrieb in eine Vorzugsrichtung ausgelegt ist, in einer zur Vorzugsrichtung entgegengesetzten Drehrichtung, mit folgenden Schritten:
a) Der Motor wird nach dem Einschalten während einer ersten Zeitspanne für Antrieb in der Vorzugsrichtung bestromt;
b) anschließend wird die Bestromung auf Antrieb in der zur Vorzugsrichtung entgegengesetzten, gewünschten Drehrichtung umgeschaltet;
c) während des Schritts b) wird der Anlauf des Motors überwacht;
d) wenn festgestellt wird, daß kein Anlauf erfolgt ist, wird während einer zweiten Zeitspanne, welche länger ist als die erste, die Bestromung des Motors auf Antrieb in der Vorzugsrichtung umgeschaltet;
e) nach Ablauf dieser zweiten Zeitspanne wird die Bestromung des Motors erneut auf Antrieb in der zur Vorzugsrichtung entgegengesetzten, gewünschten Drehrichtung umgeschaltet.

19. Verfahren nach Anspruch 18, bei welchem dem Schritt a) ein Schritt vorgeschaltet ist, bei welchem der Motor in der zur Vorzugsrichtung entgegengesetzten Drehrichtung bestromt und sein Anlauf dadurch überwacht wird, daß festgestellt wird, wie oft unter bestimmten Bedingungen eine Kommutierung (K) stattfindet.

20. Verfahren nach Anspruch 19, bei welchem die Schritte a), b) etc. nicht ausgeführt werden, wenn beim vorgeschalteten Schritt der Anlauf des Motors in der gewünschten Drehrichtung festgestellt wird.

21. Verfahren nach einem oder mehreren der Ansprüche 18 bis 20, bei welchem zum Start des Motors in der Vorzugsrichtung dem Schritt a) ein Schritt vorgeschaltet wird, bei dem der Motor in der Vorzugsrichtung bestromt und sein Anlauf in dieser Richtung dadurch überwacht wird, daß festgestellt wird, wie oft unter bestimmten Bedingungen eine Kommutierung (K) stattfindet.

22. Elektronisch kommutierter, zweipulsiger Gleichstrommotor (10), welcher für Betrieb in einer Vorzugsrichtung (14) ausgelegt ist und welcher aufweist:
Einen permanentmagnetischen Rotor (11);
einen Stator (15) mit einer Statorwicklungsanordnung (20, 21);
einen diesem Motor (10) zugeordneten Mikrocontroller oder Mikroprozessor (70);
und ein dem Mikrocontroller oder Mikroprozessor (70) zugeordnetes Programm zur Ausführung folgender Schritte:
a) Der Motor (10) wird nach dem Einschalten während einer ersten Zeitspanne für Betrieb in der Vorzugsrichtung (14) bestromt;
b) anschließend wird die Bestromung auf Antrieb in der zur Vorzugsrichtung (14) entgegengesetzten, gewünschten Drehrichtung (40) umgeschaltet;
c) während des Schritts b) wird der Anlauf des Motors (10) überwacht;
d) wenn festgestellt wird, dass kein Anlauf erfolgt ist, wird während einer zweiten Zeitspanne, welche länger ist als die erste, die Bestromung des Motors (10) auf Antrieb in.der Vorzugsrichtung (14) umgeschaltet;
e) nach Ablauf dieser zweiten Zeitspanne wird die Bestromung des Motors (10) erneut auf Antrieb in der zur Vorzugsrichtung (14) entgegengesetzten, gewünschten Drehrichtung (40) umgeschaltet.

23. Verfahren nach einem der Ansprüche 1 bis 16 zum Starten eines zweipulsigen elektronisch kommutierten Gleichstrommotors, welcher für Betrieb in eine Vorzugsrichtung ausgelegt ist, in einer gewünschten Drehrichtung, mit folgenden Schritten:
a) Der Motor wird in der gewünschten Drehrichtung gestartet;
b) hierbei wird der Anlauf überwacht;
c) wenn bei der Überwachung festgestellt wird, daß kein Anlauf erfolgt ist, wird nachfolgend während einer ersten vorgegebenen Zeitspanne die Bestromung des Motors für Antrieb entgegen der gewünschten Drehrichtung umgeschaltet, so daß der Motor während dieser Zeitspanne entgegen der gewünschten Drehrichtung angetrieben wird;
d) nach Ablauf dieser Zeitspanne wird die Bestromung des Motors erneut umgeschaltet, so daß dieser erneut in der gewünschten Drehrichtung angetrieben wird, wobei der Anlauf erneut überwacht wird.

24. Verfahren nach Anspruch 23, bei welchem dann, wenn der Anlauf in der gewünschten Drehrichtung nicht stattfindet, nach dem Schritt d) erneut die Schritte b), c) und d) durchgeführt werden, wobei statt der ersten vorgegebenen Zeitspanne eine zweite Zeitspanne verwendet wird, welche größer ist als die erste.

25. Verfahren nach Anspruch 24, bei welchem dann, wenn der Anlauf in der gewünschten Drehrichtung nicht stattfindet, die Schritte b), c) und d) erneut wiederholt werden, wobei aber statt der zweiten Zeitspanne eine dritte Zeitspanne verwendet wird, welche größer ist als die zweite.

26. Verfahren nach einem der Ansprüche 1 bis 16, 18 bis 21, 23 bis 25, bei welchem während der Bestromung zum Antrieb in der gewünschten Drehrichtung während des Anlaufvorgangs die Zahl der Kommutierungen gezählt wird (Fig. 8A: S168).

27. Verfahren nach Anspruch 26, bei welchem der Zählvorgang abgebrochen wird, wenn während der Bestromung zum Antrieb entgegen der gewünschten Drehrichtung ein Kommutierungsvorgang (K) auftritt.

28. Verfahren nach Anspruch 26 oder 27, bei welchem dann, wenn während des Starts eine vorgegebene Zahl von Kommutierungen (K) bei Antrieb in der gewünschten Drehrichtung gezählt worden ist, der Motor auf normale Kommutierung in der gewünschten Drehrichtung umgeschaltet wird.

29. Elektronisch kommutierter, zweipulsiger Gleichstrommotor (10), welcher für Betrieb in eine Vorzugsrichtung ausgelegt ist und welcher aufweist:
Einen permanentmagnetischen Rotor (11);
einen Stator (15) mit einer Statorwicklungsanordnung (20, 21);einen diesem Motor (10) zugeordneten Mikrocontroller oder Mikroprozessor (70);
und ein dem Mikrocontroller oder Mikroprozessor zugeordnetes Programm zur Ausführung folgender Schritte:
a) Der Motor (10) wird in der gewünschten Drehrichtung gestartet;
b) hierbei wird sein Anlauf überwacht;
c) wenn bei der Überwachung festgestellt wird, dass kein Anlauf erfolgt ist, wird nachfolgend während einer ersten vorgegebenen Zeitspanne die Bestromung des Motors (10) für Antrieb entgegen der gewünschten Drehrichtung umgeschaltet, so dass der Motor während dieser Zeitspanne entgegen der gewünschten Drehrichtung angetrieben wird;
d) nach Ablauf dieser Zeitspanne wird die Bestromung des Motors (10) erneut umgeschaltet, so dass er erneut in der gewünschten Drehrichtung angetrieben wird, wobei der Anlauf erneut überwacht wird.

30. Verfahren nach einem der Ansprüche 1 bis 16, 18 bis 21, 23 bis 28, mit folgenden zusätzlichen Schritten:
a) Bei der Drehung des Rotors wird ein erster Wert (Z_A) für die Zeit (T) ermittelt, die dieser für die Drehung zwischen einer ersten vorgegebenen Rotorstellung und einer zweiten vorgegebenen Rotorstellung benötigt;
b) von diesem Wert wird ein vorgegebener zweiter Wert (K1 oder K2) subtrahiert, und das Resultat (Z_A') wird zwischengespeichert;
c) beginnend bei einer auf die erste vorgegebene Rotorstellung folgenden vorgegebenen Rotorstellung wird der Ablauf einer diesem Resultat (Z_A') proportionalen Zeit überwacht;
d) nach Ablauf dieser Zeit wird ein Kommutierungsvorgang im Motor (10) bewirkt.

31. Verfahren nach Anspruch 30, bei welchem die vorgegebenen Rotorstellungen solche sind, bei welchen ein im Motor vorgesehener Rotorstellungssensor (25) im Betrieb sein Ausgangssignal (H) in vorgegebener Weise ändert.

32. Verfahren nach Anspruch 30 oder 31, bei welchem im Schritt b) der zweite Wert (K1; K2) eine drehrichtungsabhängige Größe ist.

33. Verfahren nach einem oder mehreren der Ansprüche 30 bis 32, bei welchem der zweite Wert einen vom augenblicklichen Drehzahlbereich des Motors abhängigen Wert (a, b) hat.

34. Verfahren nach einem oder mehreren der Ansprüche 30 bis 33, bei welchem unterhalb einer vorgegebenen Grenzdrehzahl (n_{g}) bei der ersten und zweiten vorgegebenen Rotorstellung ein Kommutierungssignal (K) ausgegeben wird, welches durch das Ausgangssignal (H) eines am Motor (10) vorgesehenen Rotorstellungssensors (25) definiert ist.

35. Verfahren nach einem oder mehreren der Ansprüche 30 bis 34, bei welchem im Schritt c) eine dem Resultat (Z_A') proportionale Zeit, beginnend ab der zweiten vorgegebenen Rotorstellung, ausgegeben wird.

36. Verfahren nach einem der Ansprüche 1 bis 16, 18 bis 21, 23 bis 28, 30 bis 35, bei welchem im Betrieb laufend überwacht wird (Fig. 7: S132), ob der Rotor (11) innerhalb einer vorgegebenen Zeitspanne ab dem Durchlaufen einer vorgegebenen ersten Rotorstellung eine zweite vorgegebenen Rotorstellung erreicht oder nicht, und im negativen Fall der Motor auf eine Startroutine (Fig. 7: S118) für die gewünschte Drehrichtung umgeschaltet wird (Fig. 7: S134).

37. Motor nach einem der Ansprüche 17, 22 oder 29, welcher als zweipulsiger Motor mit einem Reluktanz-Hilfsmoment (Tᵣₑₗ) ausgebildet ist, welches bei Betrieb in der für diesen Motor vorgesehenen Vorzugsrichtung (14) etwa gegenphasig zum elektromagnetischen Antriebsmoment (Tₑₗ) des Motors verläuft (Fig. 1 und 2).

38. Motor nach Anspruch 37, bei welchem der Rotorstellungssensor (25) so angeordnet ist, daß er dann sein Ausgangssignal (H) ändert, wenn sich der Rotor (11) des Motors in einer Stellung befindet, in der durch den Motor kein elektromagnetisches Drehmoment (Tₑₗ) erzeugbar ist.

## Claims

1. Method for starting a two-pulse electronically commutated direct-current motor which is designed for operation in one preferential direction, in one of two directions of rotation, in the following called the desired direction of rotation, with the following steps:
a) after switching on, the rotor of the motor is set in forced oscillation about its resting position by a starting routine (fig. 7: S118; figs. 8A and 8B) - by means of alternating energisation in one and the other direction of rotation;
b) during the starting routine, monitoring is carried out (fig. 8A: S140, S160, S162; fig. 8B: S171, S173, S176) to see whether the motor starts;
c) if it is detected that the motor has started (fig. 8A: S170), the starting routine is terminated (fig. 8A: S174).

2. Method according to claim 1, in which at least when starting counter to the preferential direction the forced oscillation exhibits at least one energisation cycle with one energisation operation (fig. 17: 290) counter to the desired direction of rotation and one energisation operation (fig. 17: 292) in the desired direction of rotation (figs. 16, 17).

3. Method according to claim 1 or 2, in which with each sequence of successive energisation operations taking place during the starting routine the time for the energisation operation counter to the desired direction of rotation (fig. 12: DIR_S=/DIR) is shorter than the time for the energisation operation in the desired direction of rotation (fig. 12: DIR_S=DIR).

4. Method according to one or more of claims 1 to 3, in which with successive energisation cycles of the starting routine carried out for the purpose of producing a forced oscillation the ratio of the time for the energisation operation in the desired direction of rotation (fig. 12: DIR_S=DIR) to the time for the energisation operation counter to the desired direction of rotation (fig. 12: DIR_S=/DIR) is changed and in particular reduced (fig. 12).

5. Method according to one or more of claims 1 to 4, in which with successive energisation cycles of the starting routine carried out for the purpose of producing a forced oscillation the sum (C) of the times for the energisation operation in the desired direction of rotation and for the energisation operation counter to the desired direction of rotation is essentially kept constant (fig. 12).

6. Method according to one or more of claims 1 to 5, in which during the energisation operation of the motor in the desired direction of rotation carried out during the starting routine the number of signal changes (K) in the output signal (H) of a rotor position sensor associated with the motor is counted (fig. 8A: S168).

7. Method according to claim 6, in which the starting routine is terminated when the number of signal changes (K) has exceeded a predetermined minimum value (fig. 8A: S170, S172, S174).

8. Method according to one or more of the preceding claims, in which monitoring is carried out during the starting routine to see whether the rotor of the motor has reached a predetermined rotational position, or one of a plurality of predetermined rotational positions, within a predetermined period of time (SW) from the start of the energisation operation in the desired direction of rotation, and/or from running through a predetermined rotational position in the desired direction of rotation.

9. Method according to claim 8, in which during the starting routine when the rotor has reached the predetermined rotational position, or one of a plurality of predetermined rotational positions, within the predetermined length of time during the energisation operation in the desired direction of rotation, from this point monitoring is carried out again to see whether the rotor has reached a new predetermined rotational position, or one of a plurality of predetermined rotational positions, within the predetermined period of time after passing through this rotational position, and if successful, this monitoring operation is carried out a predetermined number of times.

10. Method according to claim 8 or 9, in which when the rotor of the motor has not reached the predetermined rotational position, or one of a plurality of predetermined rotational positions, within the predetermined period of time, the energisation of the motor for driving counter to the desired direction of rotation is reversed.

11. Method according to claim 10, in which the energisation for driving counter to the desired direction of rotation is limited to a predetermined period of time (C - SW) and after this period of time has elapsed the motor (10) is switched again to energisation for driving in the desired direction of rotation.

12. Method according to claim 11, in which during the renewed energisation for driving in the desired direction of rotation monitoring is carried out again to see whether the rotor of the motor has reached a predetermined rotational position, or one of a plurality of predetermined rotational positions, within a predetermined period of time from the beginning of the energisation operation in the desired direction of rotation, or after passing through a predetermined rotational position in the desired direction of rotation.

13. Method according to claim 12, in which when the rotor of the motor has not reached the predetermined rotational position, or one of a plurality of predetermined rotational positions, within the predetermined period of time, the energisation operation of the motor is switched again for driving counter to the desired direction of rotation.

14. Method according to claim 13, in which the time for a second energisation operation of the motor counter to the desired direction of rotation is lengthened in comparison to the time predetermined for the first energisation operation counter to the desired direction of rotation in order to obtain a forced oscillation with increasing amplitude.

15. Method according to one or more of claims 8 to 14, in which the predetermined rotational positions of the rotor are those in which a rotor position sensor provided on the motor changes its output signal in predetermined manner.

16. Method according to claim 15, in which the predetermined rotational positions of the rotor are those rotational positions (K) in which the stator current of the motor is commutated at least during the starting routine.

17. Electronically commutated two-pulse direct-current motor (10), which is designed for operation in one preferential direction and which exhibits:
a permanent magnet rotor (11);
a stator (15) with a stator winding arrangement (20, 21);
a microcontroller or microprocessor (70) associated with this motor (10) ;
a programme associated with the microcontroller or microprocessor for execution of the following steps:
a) after switching on, the rotor (11) is set in forced oscillation about its resting position by a starting routine (fig. 7: S118) - by means of alternating energisation in one and the other direction of rotation;
b) during the starting routine monitoring is carried out (fig. 8A: S140, S160, S162; fig. 8B: S171, S173, S176) to see whether the motor (10) starts;
c) if it is detected that the motor has started (fig. 8A: S170), the starting routine is terminated (fig. 8A: S174).

18. Method according to one of claims 1 to 16 for starting a two-pulse electronically commutated direct-current motor, which is designed for operation in one preferential direction, in a direction of rotation counter to the preferential direction, with the following steps:
a) after switching on, the motor is energised during a first period of time for driving in the preferential direction;
b) then the energisation is reversed to driving in the desired direction of rotation counter to the preferential direction;
c) the starting of the motor is monitored during the step b);
d) if it is detected that no starting has taken place, the energisation of the motor is switched to driving in the preferential direction during a second period of time which is longer than the first;
e) after this second period of time has elapsed, the energisation of the motor is switched again to driving in the desired direction of rotation counter to the preferential direction.

19. Method according to claim 18, in which the step a) is preceded by a step in which the motor is energised in the direction of rotation counter to the preferential direction and its starting is monitored in that the frequency with which commutation (K) takes place in certain conditions is detected.

20. Method according to claim 19, in which the steps a), b), etc. are not carried out if the starting of the motor in the desired direction of rotation is detected during the preceding step.

21. Method according to one or more of claims 18 to 20, in which to start the motor in the preferential direction the step a) is preceded by a step in which the motor is energised in the preferential direction and its starting in this direction is monitored in that the frequency with which commutation (K) takes place in certain conditions is detected.

22. Electronically commutated two-pulse direct-current motor (10), which is designed for operation in one preferential direction (14) and which exhibits:
a permanent magnet rotor (11);
a stator (15) with a stator winding arrangement (20, 21);
a microcontroller or microprocessor (70) associated with this motor (10);
and a programme associated with the microcontroller or microprocessor (70) for carrying out the following steps:
a) after switching on, the motor (10) is energised for operation in the preferential direction (14) during a first period of time;
b) then the energisation is switched to driving in the desired direction of rotation (40) counter to the preferential direction (14);
c) the starting of the motor (10) is monitored during the step b);
d) if it is detected that no starting has taken place, the energisation of the motor (10) is switched to driving in the preferential direction (14) during a second period of time which is longer than the first;
e) after this second period of time has elapsed, the energisation of the motor (10) is switched again to driving in the desired direction of rotation (40) counter to the preferential direction (14).

23. Method according to one of claims 1 to 16 for starting a two-pulse electronically commutated direct-current motor which is designed for operation in one preferential direction, in a desired direction of rotation, with the following steps:
a) the motor is started in the desired direction of rotation;
b) the starting is monitored;
c) if it is detected during the monitoring that no starting has taken place, the energisation of the motor is then switched to driving counter to the desired direction of rotation during a first predetermined period of time so that the motor is driven counter to the desired direction of rotation during this period of time;
d) after this period of time has elapsed, the energisation of the motor is reversed again so that this again is driven in the desired direction of rotation, and the starting is monitored again.

24. Method according to claim 23, in which when the starting does not take place in the desired direction of rotation, after the step d) the steps b), c) and d) are carried out again using instead of the first predetermined period of time a second period of time which is greater than the first.

25. Method according to claim 24, in which when the starting does not take place in the desired direction of rotation, the steps b), c) and d) are repeated again, but using instead of the second period of time a third period of time which is greater than the second.

26. Method according to one of claims 1 to 16, 18 to 21, 23 to 25, in which during the energisation for driving in the desired direction of rotation during the starting operation the number of commutation operations is counted (fig. 8A: S168).

27. Method according to claim 26, in which the counting operation is aborted when a commutation operation (K) occurs during the energisation for driving counter to the desired direction of rotation.

28. Method according to claim 26 or 27, in which when a predetermined number of commutation operations (K) have been counted while driving in the desired direction of rotation during starting, the motor is switched to normal commutation in the desired direction of rotation.

29. Electronically commutated two-pulse direct-current motor (10), which is designed for operation in one preferential direction and which exhibits:
a permanent magnet rotor (11);
a stator (15) with a stator winding arrangement (20, 21);
a microcontroller or microprocessor (70) associated with this motor (10);
and a programme associated with the microcontroller or microprocessor for carrying out the following steps:
a) the motor (10) is started in the desired direction of rotation;
b) its starting is monitored;
c) if it is detected during the monitoring that no starting has taken place, the energisation of the motor (10) is then switched to driving counter to the desired direction of rotation during a first predetermined period of time so that the motor is driven counter to the desired direction of rotation during this period of time;
d) after this period of time has elapsed, the energisation of the motor (10) is reversed again so that it is driven in the desired direction of rotation again, and the starting is monitored again.

30. Method according to one of claims 1 to 16, 18 to 21, 23 to 28, with the following additional steps:
a) during the rotation of the rotor a first value (Z_A) is established for the time (T) which this requires for rotation between a first predetermined rotor position and a second predetermined rotor position;
b) a predetermined second value (K1 or K2) is subtracted from this value, and the result (Z_A') is temporarily stored;
c) beginning at a predetermined rotor position following the first predetermined rotor position, the elapsing of a time proportional to this result (Z_A') is monitored;
d) after this time has elapsed, a commutation operation is produced in the motor (10).

31. Method according to claim 30, in which the predetermined rotor positions are those in which a rotor position sensor (25) provided in the motor changes its output signal (H) in predetermined manner while in operation.

32. Method according to claim 30 or 31, in which in the step b) the second value (K1; K2) is of a magnitude dependent on the direction of rotation.

33. Method according to one or more of claims 30 to 32, in which the second value has a value (a, b) which is dependent on the instantaneous rotational speed range of the motor.

34. Method according to one or more of claims 30 to 33, in which below a predetermined limiting rotational speed (n_{g}) in the first and second predetermined rotor position a commutation signal (K) is emitted which is defined by the output signal (H) of a rotor position sensor (25) provided on the motor (10).

35. Method according to one or more of claims 30 to 34, in which in the step c) a time proportional to the result (Z_A') is emitted beginning at the second predetermined rotor position.

36. Method according to one of claims 1 to 16, 18 to 21, 23 to 28, 30 to 35, in which monitoring is carried out continuously in operation (fig. 7: S132) to see whether the rotor (11) reaches a second predetermined rotor position or not within a predetermined period of time after passing through a predetermined first rotor position, and in the negative case the motor is switched to a starting routine (fig. 7: S118) for the desired direction of rotation (fig. 7: S134).

37. Motor according to one of claims 17, 22 or 29, which is embodied as a two-pulse motor with an auxiliary reluctance moment (Tᵣₑₗ) which during operation in the preferential direction (14) provided for this motor runs roughly in phase opposition to the electromagnetic driving moment (Tₑₗ) of the motor (figs. 1 and 2).

38. Motor according to claim 37, in which the rotor position sensor (25) is arranged so that it changes its output signal (H) when the rotor (11) of the motor is in a position in which no electromagnetic turning moment (Tₑₗ) can be produced by the motor.

## Revendications

1. Procédé pour le démarrage d'un moteur à courant continu biphasé à commutation électronique, conçu pour fonctionner dans un sens préférentiel, dans l'un des deux sens de rotation possibles, appelé dans la suite sens de rotation souhaité, comprenant les étapes suivantes :
a) après la mise sous tension, le rotor du moteur est mis en oscillation forcée autour de sa position de repos par une routine de démarrage (fig. 7: S118 ; fig. 8A & 8B) au moyen d'une excitation alternante dans l'un et dans l'autre sens de rotation ;
b) pendant la routine de démarrage, on surveille (fig. 8A : S140, S160, S162 ; fig. 8B : S171, S173, S176) si le moteur démarre ;
c) quand on constate que le moteur a démarré (fig. 8A : S170), on quitte la routine de démarrage (fig. 8A : S174).

2. Procédé selon la revendication 1, dans lequel l'oscillation forcée présente, au moins dans le cas d'un démarrage dans le sens opposé au sens préférentiel, au minimum un cycle d'excitation comprenant une excitation (fig. 17 : 290) dans le sens opposé au sens de rotation souhaité et une excitation (fig. 17 : 292) dans le sens de rotation souhaité (fig. 16, 17).

3. Procédé selon la revendication 1 ou 2, dans lequel à chaque suite d'excitations successives se produisant pendant la routine de démarrage, le temps pour l'excitation dans le sens opposé au sens de rotation souhaité (fig. 12 : DIR_S=/DIR) est plus court que le temps pour l'excitation dans le sens de rotation souhaité (fig. 12 : DIR_S=DIR).

4. Procédé selon une ou plusieurs des revendications 1 à 3, dans lequel, lors des cycles d'excitation de la routine de démarrage effectués pour générer une oscillation forcée, on fait varier et en particulier on diminue (fig. 12) le rapport du temps pour l'excitation dans le sens de rotation souhaité (fig. 12 : DIR_S=DIR) au temps pour l'excitation dans le sens opposé au sens de rotation souhaité (fig. 12 : DIR_S=/DIR).

5. Procédé selon une ou plusieurs des revendications 1 à 4, dans lequel, lors des cycles d'excitation de la routine de démarrage effectués pour générer une oscillation forcée, on maintient globalement constante (fig. 12) la somme (C) des temps pour l'excitation dans le sens de rotation souhaité et pour l'excitation dans le sens opposé au sens de rotation souhaité.

6. Procédé selon une ou plusieurs des revendications 1 à 5, dans lequel, pendant l'excitation du moteur dans le sens de rotation souhaité effectuée lors de la routine de démarrage, on compte le nombre d'inversions (K) du signal de sortie (H) d'un capteur de position de rotor associé au moteur (fig. 8A : S168).

7. Procédé selon la revendication 6, dans lequel on quitte la routine de démarrage lorsque le nombre des inversions de signal (K) a dépassé une valeur minimale donnée (fig. 8A : S170, S172, S174).

8. Procédé selon une ou plusieurs des revendications précédentes, dans lequel on surveille pendant la routine de démarrage si le rotor a atteint dans un laps de temps donné (SW) à compter du début de l'excitation dans le sens de rotation souhaité, et/ou à compter du passage à une position de rotation donnée dans le sens de rotation souhaité, une position de rotation donnée ou une parmi plusieurs positions de rotation données.

9. Procédé selon la revendication 8, dans lequel, pendant la routine de démarrage, si le rotor a atteint la position de rotation donnée, ou une parmi plusieurs positions de rotation données, dans le laps de temps donné lors de l'excitation dans le sens de rotation souhaité, on surveille de nouveau à partir de cet instant si le rotor a atteint une nouvelle position de rotation donnée, ou une parmi plusieurs positions de rotation données dans le laps de temps donné à compter du passage à cette position de rotation et, dans l'affirmative, on effectue cette surveillance un nombre de fois donné.

10. Procédé selon la revendication 8 ou 9, dans lequel, si le rotor du moteur n'a pas atteint la position de rotation donnée, ou une parmi plusieurs positions de rotation données dans le laps de temps donné, on commute l'excitation du moteur pour entraînement dans le sens opposé au sens de rotation souhaité.

11. Procédé selon la revendication 10, dans lequel l'excitation pour un entraînement dans le sens opposé au sens de rotation souhaité est limitée à un laps de temps donné (C - SW) et, après expiration de ce laps de temps, on commute de nouveau le moteur (10) sur excitation pour entraînement dans le sens de rotation souhaité.

12. Procédé selon la revendication 11, dans lequel, lors de la nouvelle excitation pour entraînement dans le sens de rotation souhaité, on surveille de nouveau si le rotor a atteint dans un laps de temps donné à compter du début de l'excitation dans le sens de rotation souhaité, ou à compter du passage à une position de rotation donnée dans le sens de rotation souhaité, une position de rotation donnée ou une parmi plusieurs positions de rotation données.

13. Procédé selon la revendication 12, dans lequel, si le rotor du moteur n'a pas atteint la position de rotation donnée, ou une parmi plusieurs positions de rotation données dans le laps de temps donné, on commute de nouveau l'excitation du moteur pour entraînement dans le sens opposé au sens de rotation souhaité.

14. Procédé selon la revendication 13, dans lequel le temps pour une deuxième excitation du moteur dans le sens opposé au sens de rotation souhaité est prolongé par rapport au temps donné pour la première excitation dans le sens opposé au sens de rotation souhaité, afin d'obtenir une oscillation forcée d'amplitude croissante.

15. Procédé selon une ou plusieurs des revendications 8 à 14, dans lequel on utilise comme positions de rotation données du rotor celles où le signal de sortie d'un capteur de position de rotor prévu sur le moteur change d'une manière donnée.

16. Procédé selon la revendication 15, dans lequel on utilise comme positions de rotation données du rotor les positions de rotation (K) où, au moins pendant la routine de démarrage, le courant de stator du moteur est commuté.

17. Moteur à courant continu biphasé à commutation électronique (10), conçu pour fonctionner dans un sens préférentiel et présentant :
un rotor à aimant permanent (11) ;
un stator (15) avec des enroulements statoriques (20, 21) ;
un microcontrôleur ou microprocesseur (70) associé à ce moteur (10) ;
un programme associé au microcontrôleur ou microprocesseur pour l'exécution des étapes suivantes :
a) après la mise sous tension, le rotor (11) est mis en oscillation forcée autour de sa position de repos par une routine de démarrage (fig. 7: S118) au moyen d'une excitation alternante dans l'un et dans l'autre sens de rotation ;
b) pendant la routine de démarrage, on surveille (fig. 8A : S140, S160, S162 ; fig. 8B : S171, S173, S176) si le moteur (10) démarre ;
c) quand on constate que le moteur a démarré (fig. 8A : S170), on quitte la routine de démarrage (fig. 8A : S174).

18. Procédé selon l'une des revendications 1 à 16 pour le démarrage d'un moteur à courant continu biphasé à commutation électronique, conçu pour fonctionner dans un sens préférentiel, dans un sens de rotation opposé au sens préférentiel, comprenant les étapes suivantes :
a) après la mise sous tension, le moteur est excité pendant un premier laps de temps pour entraînement dans le sens préférentiel ;
b) ensuite, on commute l'excitation pour entraînement dans le sens de rotation souhaité, opposé au sens préférentiel ;
c) pendant l'étape b), on surveille le démarrage du moteur ;
d) si on constate qu'aucun démarrage n'a eu lieu, on commute pendant un deuxième laps de temps, plus long que le premier, l'excitation du moteur sur entraînement dans le sens de rotation préférentiel ;
e) après expiration de ce deuxième laps de temps, on commute de nouveau l'excitation du moteur sur entraînement dans le sens de rotation souhaité, opposé au sens préférentiel.

19. Procédé selon la revendication 18, dans lequel l'étape a) est précédée d'une étape dans laquelle le moteur est excité dans le sens de rotation opposé au sens de rotation préférentiel et son démarrage est surveillé en déterminant le nombre de commutations (K) qui se produisent dans des conditions définies.

20. Procédé selon la revendication 19, dans lequel les étapes a), b), etc. ne sont pas exécutées si on constate au cours de l'étape précédente que le moteur a démarré dans le sens de rotation souhaité.

21. Procédé selon une ou plusieurs des revendications 18 à 20, dans lequel, pour le démarrage du moteur dans le sens préférentiel, l'étape a) est précédée d'une étape dans laquelle le moteur est excité dans le sens préférentiel et son démarrage dans ce sens est surveillé en déterminant le nombre de commutations (K) qui se produisent dans des conditions définies.

22. Moteur à courant continu biphasé à commutation électronique (10), conçu pour fonctionner dans un sens préférentiel (14) et présentant :
un rotor à aimant permanent (11) ;
un stator (15) avec des enroulements statoriques (20, 21) ;
un microcontrôleur ou microprocesseur (70) associé à ce moteur (10) ;
et un programme associé au microcontrôleur ou microprocesseur (70) pour l'exécution des étapes suivantes :
a) après la mise sous tension, le moteur (10) est excité pendant un premier laps de temps pour entraînement dans le sens préférentiel (14) ;
b) ensuite, on commute l'excitation pour entraînement dans le sens de rotation souhaité (40), opposé au sens préférentiel (14) ;
c) pendant l'étape b), on surveille le démarrage du moteur (10) ;
d) si on constate qu'aucun démarrage n'a eu lieu, on commute pendant un deuxième laps de temps, plus long que le premier, l'excitation du moteur (10) sur entraînement dans le sens de rotation préférentiel (14) ;
e) après expiration de ce deuxième laps de temps, on commute de nouveau l'excitation du moteur (10) sur entraînement dans le sens de rotation souhaité (40), opposé au sens préférentiel (14).

23. Procédé selon l'une des revendications 1 à 16 pour le démarrage d'un moteur à courant continu biphasé à commutation électronique, conçu pour fonctionner dans un sens préférentiel, dans un sens de rotation souhaité, comprenant les étapes suivantes :
a) le moteur est démarré dans le sens de rotation souhaité ;
b) en même temps, on surveille le démarrage ;
c) si on constate lors de la surveillance qu'aucun démarrage n'a eu lieu, on commute ensuite pendant un premier laps de temps donné l'excitation du moteur pour entraînement dans le sens opposé au sens de rotation souhaité, de façon à entraîner le moteur dans le sens opposé au sens de rotation souhaité pendant ce laps de temps ;
d) après expiration de ce laps de temps, on commute de nouveau l'excitation du moteur de façon qu'il soit de nouveau entraîné dans le sens de rotation souhaitée, le démarrage étant de nouveau surveillé.

24. Procédé selon la revendication 23, dans lequel, si le démarrage dans le sens de rotation souhaité n'a pas lieu, on exécute après l'étape d) de nouveau les étapes b), c) et d), en utilisant à la place du premier laps de temps donné un deuxième laps de temps plus grand que le premier.

25. Procédé selon la revendication 24, dans lequel, si le démarrage dans le sens de rotation souhaité n'a pas lieu, on répète de nouveau les étapes b), c) et d), mais en utilisant à la place du deuxième laps de temps un troisième laps de temps plus grand que le dixième.

26. Procédé selon Tune des revendications 1 à 16, 18 à 21, 23 à 25, dans lequel, pendant l'excitation pour entraînement dans le sens de rotation souhaité lors du processus de démarrage, on compte le nombre de commutations (fig. 8A : S168).

27. Procédé selon la revendication 26, dans lequel le comptage est interrompu si une commutation (K) se produit pendant l'excitation pour entraînement dans le sens opposé au sens de rotation souhaité.

28. Procédé selon la revendication 26 ou 27, dans lequel si, pendant le démarrage, on a compté un nombre de commutations (K) donné lors de l'entraînement dans le sens de rotation souhaité, le moteur est commuté sur excitation normale dans le sens de rotation souhaité.

29. Moteur à courant continu biphasé à commutation électronique (10), conçu pour fonctionner dans un sens préférentiel et présentant :
un rotor à aimant permanent (11) ;
un stator (15) avec des enroulements statoriques (20, 21) ;
un microcontrôleur ou microprocesseur (70) associé à ce moteur (10) ;
et un programme associé au microcontrôleur ou microprocesseur pour l'exécution des étapes suivantes :
a) le moteur (10) est démarré dans le sens de rotation souhaité ;
b) en même temps, on surveille le démarrage ;
c) si on constate lors de la surveillance qu'aucun démarrage n'a eu lieu, on commute ensuite pendant un premier laps de temps donné l'excitation du moteur (10) pour entraînement dans le sens opposé au sens de rotation souhaité, de façon à entraîner le moteur dans le sens opposé au sens de rotation souhaité pendant ce laps de temps ;
d) après expiration de ce laps de temps, on commute de nouveau l'excitation du moteur (10) de façon qu'il soit de nouveau entraîné dans le sens de rotation souhaitée, le démarrage étant de nouveau surveillé.

30. Procédé selon l'une des revendications 1 à 16, 18 à 21, 23 à 28, avec les étapes supplémentaires suivantes :
a) lors de la rotation du rotor, on détermine une première valeur (Z_A) du temps (T) qu'il met à passer d'une première position de rotor donnée à une dixième position de rotor donnée ;
b) de cette valeur, on soustrait une deuxième valeur donnée (K1 ou K2) et le résultat est mis en mémoire ;
c) en commençant par une position de rotor donnée suivant la première position de rotor donnée, on surveille l'expiration d'un temps proportionnel à ce résultat (Z_A') ;
d) après expiration de ce temps, on provoque une commutation du moteur (10).

31. Procédé selon la revendication 30, dans lequel les positions de rotor données sont celles où le signal de sortie (H) d'un capteur de position de rotor (25) prévu dans le moteur change d'une manière donnée en fonctionnement.

32. Procédé selon la revendication 30 ou 31, dans lequel à l'étape b) la deuxième valeur (K1 ; K2) est une grandeur dépendante du sens de rotation.

33. Procédé selon une ou plusieurs des revendications 30 à 32, dans lequel la deuxième valeur a une valeur (a, b) dépendante de la plage de régimes actuelle du moteur.

34. Procédé selon une ou plusieurs des revendications 30 à 33, dans lequel, au-dessous d'un régime limite donné (n_{g}) à la première et à la deuxième position de rotor donnée, on délivre un signal de commutation (K) qui est défini par le signal de sortie (H) d'un capteur de position de rotor (25) prévu sur le moteur (10).

35. Procédé selon une ou plusieurs des revendications 30 à 34, dans lequel on délivre à l'étape d) un temps proportionnel au résultat (Z_A') commençant à partir de la deuxième position de rotor donnée.

36. Procédé selon une ou plusieurs des revendications 1 à 16, 18 à 21, 23 à 28, 30 à 35, dans lequel on surveille en permanence en fonctionnement (fig. 7 : S132) si le rotor (11) atteint ou non une dixième position de rotor donnée dans un laps de temps donné à compter du passage à une première position de rotor donnée et, dans la négative, le moteur est commuté sur une routine de démarrage (fig. 7 : S118) pour le sens de rotation souhaité (fig. 7: S134).

37. Moteur selon l'une des revendications 17, 22 ou 29, formé comme un moteur biphasé avec un couple auxiliaire de réluctance (Tᵣₑₗ) approximativement en opposition de phase avec le couple d'entraînement électromagnétique (Tₑₗ) du moteur en cas de fonctionnement dans le sens préférentiel (14) prévu pour ce moteur (fig. 1 et 2).

38. Procédé selon la revendication 37, dans lequel le capteur de position de rotor (25) est disposé de telle façon que son signal de sortie (H) change quand le rotor (11) du moteur se trouve dans une position dans laquelle le moteur ne peut générer aucun couple électromagnétique (Tₑₗ).
